# EUROPEAN PATENT APPLICATION

(11) **EP 4 598 225 A1**
(43) Date of publication of application: **06.08.2025**
(21) Application number: 23872983.4
(22) Date of filing: 22.09.2023
(51) Int. Cl.: H04W 72/232, H04W 72/12, H04B 7/0456, H04W 52/14, H04W 52/32, H04L 1/08, H04L 5/00

(54) **UPLINK TRANSMISSION AND RECEPTION METHOD IN WIRELESS COMMUNICATION SYSTEM, AND DEVICE THEREFOR**

(30) Priority: 29.09.2022 US 202263411591 P
(71) Applicant: LG Electronics Inc., Yeongdeungpo-gu Seoul 07336 (KR)
(72) Inventor: GO, Seongwon, Seoul 06772 (KR); KIM, Hyungtae, Seoul 06772 (KR); PARK, Haewook, Seoul 06772 (KR)
(74) Representative: Plasseraud IP
(86) International application number: PCT/KR2023/014552
(87) International publication number: WO 2024/071866

(57) **Abstract**

A method according to one embodiment of the present specification comprises the steps of: receiving configuration information related to an SRS; receiving configuration information related to a PUSCH; receiving DCI for PUSCH scheduling; and transmitting the PUSCH on the basis of the DCI. The number of layers related to the PUSCH is greater than 4. The PUSCH is transmitted on the basis of antenna ports. The antenna ports are determined on the basis of i) at least one from among eight first-SRS-ports related to a first SRS resource set, and/or ii) at least one from among eight second-SRS-ports related to a second SRS resource set.

## Description

### [TECHNICAL FIELD]

The present disclosure relates to an uplink transmission and reception method in a wireless communication system, and a device therefor.

### [BACKGROUND]

Mobile communication systems have been developed to guarantee user activity while providing voice services. Mobile communication systems are expanding their services from voice only to data. Current soaring data traffic is depleting resources and users' demand for higher-data rate services is leading to the need for more advanced mobile communication systems.

Next-generation mobile communication systems are required to meet, e.g., handling of explosively increasing data traffic, significant increase in per-user transmission rate, working with a great number of connecting devices, and support for very low end-to-end latency and high-energy efficiency. To that end, various research efforts are underway for various technologies, such as dual connectivity, massive multiple input multiple output (MIMO), in-band full duplex, non-orthogonal multiple access (NOMA), super wideband support, and device networking.

According to an existing scheme (e.g. Rel-17), a maximum number of ports/layers for PUSCH transmission is 4. For non-codebook-based PUSCH transmission, up to 4 1-port SRS resources in an SRS resource set can be configured.

In Rel-18, there is ongoing discussion about increasing the maximum number of ports/layers for uplink transmission to up to 8. In this case, to support (non-codebook-based) PUSCH transmission based on up to 8 ports with only 1-port SRS resource, a size of an SRI field must be increased by up to two times.

### [DISCLOSURE]

### [TECHNICAL PROBLEM]

As described above, in order to support the PUSCH transmission based on up to 8 ports (i.e., up to 8 layers) based on the 1-port SRS resource, the size of the SRI field must be increased. Therefore, a problem arises in which an overhead of a DCI payload increases.

An object of the present disclosure is to propose a method to reduce the overhead of the DCI payload in supporting PUSCH transmission based on up to 8 ports (up to 8 layers).

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

### [TECHNICAL SOLUTION]

A method performed by a user equipment (UE) in a wireless communication system according to an embodiment of the present disclosure comprises receiving configuration information related to a sounding reference signal (SRS), receiving configuration information related to a physical uplink shared channel (PUSCH), receiving downlink control information (DCI) for scheduling the PUSCH, and transmitting the PUSCH based on the DCI.

Two SRS resource sets are configured based on the configuration information related to the SRS, and usages of the two SRS resource sets are configured as a codebook or a non-codebook.

A transmission scheme related to the PUSCH is configured as a codebook based transmission or a non-codebook based transmission based the configuration information.

The DCI includes at least one of i) an SRS resource set indicator field, ii) a first SRS resource indicator (SRI) field, and/or iii) a second SRS resource indicator (SRI) field.

A number of layers related to the PUSCH is larger than 4. The PUSCH is transmitted based on antenna ports. The antenna ports are based on SRS ports related to one or more SRS resources indicated based on the DCI.

The antenna ports are determined based on i) at least one of eight first SRS ports related to a first SRS resource set and/or ii) at least one of eight second SRS ports related to a second SRS resource set.

Based on a value of the SRS resource set indicator field being 0 or 1: the one or more SRS resources may be indicated based on the first SRI field, and the one or more SRS resources may be related to the first SRS resource set or the second SRS resource set.

A maximum number of bits of the first SRI field may be 8, and a number of bits of the second SRI field may be 0.

The antenna ports may be determined based on i) five or more first SRS ports among the eight first SRS ports or ii) five or more second SRS ports among the eight second SRS ports.

The PUSCH may be related to a single transmission and reception point (TRP).

Based on the value of the SRS resource set indicator field being 2 or 3: the one or more SRS resources may include i) at least one SRS resource indicated based on the first SRI field and ii) at least one SRS resource indicated based on the second SRI field.

The antenna ports may be determined based on i) up to four first SRS ports among the eight first SRS ports and ii) up to four second SRS ports among the eight second SRS ports.

At least one SRS resource indicated based on each SRI field may be related to the first SRS resource set or the second SRS resource set.

The PUSCH may be related to multiple transmission and reception points (TRPs).

Based on a value of the SRS resource set indicator field being 0 or 1: the one or more SRS resources may include at least one SRS resource indicated based on each SRI field.

A PUSCH power control parameter set related to a codepoint of each SRI field may be same.

The PUSCH power control parameter set may be associated with only one of a codepoint of the first SRI field and a codepoint of the second SRI field.

The DCI may include a 1-bit field. The 1-bit field may indicate whether the PUSCH is related to a single TRP or multiple TRPs.

Based on whether the SRS resource set indicator being included in the DCI, whether the PUSCH is related to a single TRP or multiple TRPs may be determined.

A repetition number related to the PUSCH may be determined based on the DCI. Whether the PUSCH is related to a single TRP or multiple TRPs may be determined based on the repetition number.

A user equipment (UE) operating in a wireless communication system according to another embodiment of the present disclosure comprises one or more transceivers, one or more processors, and one or more memories operably connectable to the one or more processors, and storing instructions of configuring the one or more processors to perform operations based on being executed by the one or more processors.

The operations include receiving configuration information related to a sounding reference signal (SRS), receiving configuration information related to a physical uplink shared channel (PUSCH), receiving downlink control information (DCI) for scheduling the PUSCH, and transmitting the PUSCH based on the DCI.

Two SRS resource sets are configured based on the configuration information related to the SRS, and usages of the two SRS resource sets are configured as a codebook or a non-codebook.

A transmission scheme related to the PUSCH is configured as a codebook based transmission or a non-codebook based transmission based the configuration information.

The DCI includes at least one of i) an SRS resource set indicator field, ii) a first SRS resource indicator (SRI) field, and/or iii) a second SRS resource indicator (SRI) field.

A number of layers related to the PUSCH is larger than 4. The PUSCH is transmitted based on antenna ports. The antenna ports are based on SRS ports related to one or more SRS resources indicated based on the DCI.

The antenna ports are determined based on i) at least one of eight first SRS ports related to a first SRS resource set and/or ii) at least one of eight second SRS ports related to a second SRS resource set.

A device according to another embodiment of the present disclosure comprises one or more memories and one or more processors functionally connected to the one or more memories.

The one or more memories include instructions of configuring the one or more processors to perform operations based on being executed by the one or more processors.

The operations include receiving configuration information related to a sounding reference signal (SRS), receiving configuration information related to a physical uplink shared channel (PUSCH), receiving downlink control information (DCI) for scheduling the PUSCH, and transmitting the PUSCH based on the DCI.

Two SRS resource sets are configured based on the configuration information related to the SRS, and usages of the two SRS resource sets are configured as a codebook or a non-codebook.

A transmission scheme related to the PUSCH is configured as a codebook based transmission or a non-codebook based transmission based the configuration information.

The DCI includes at least one of i) an SRS resource set indicator field, ii) a first SRS resource indicator (SRI) field, and/or iii) a second SRS resource indicator (SRI) field.

A number of layers related to the PUSCH is larger than 4. The PUSCH is transmitted based on antenna ports. The antenna ports are based on SRS ports related to one or more SRS resources indicated based on the DCI.

The antenna ports are determined based on i) at least one of eight first SRS ports related to a first SRS resource set and/or ii) at least one of eight second SRS ports related to a second SRS resource set.

One or more non-transitory computer-readable media according to another embodiment of the present disclosure stores one or more instructions.

One or more instructions executable by one or more processors configure the one or more processors to perform operations.

The operations include receiving configuration information related to a sounding reference signal (SRS), receiving configuration information related to a physical uplink shared channel (PUSCH), receiving downlink control information (DCI) for scheduling the PUSCH, and transmitting the PUSCH based on the DCI.

Two SRS resource sets are configured based on the configuration information related to the SRS, and usages of the two SRS resource sets are configured as a codebook or a non-codebook.

A transmission scheme related to the PUSCH is configured as a codebook based transmission or a non-codebook based transmission based the configuration information.

The DCI includes at least one of i) an SRS resource set indicator field, ii) a first SRS resource indicator (SRI) field, and/or iii) a second SRS resource indicator (SRI) field.

A number of layers related to the PUSCH is larger than 4. The PUSCH is transmitted based on antenna ports. The antenna ports are based on SRS ports related to one or more SRS resources indicated based on the DCI.

The antenna ports are determined based on i) at least one of eight first SRS ports related to a first SRS resource set and/or ii) at least one of eight second SRS ports related to a second SRS resource set.

A method performed by a base station in a wireless communication system according to another embodiment of the present disclosure comprises transmitting configuration information related to a sounding reference signal (SRS), transmitting configuration information related to a physical uplink shared channel (PUSCH), transmitting downlink control information (DCI) for scheduling the PUSCH, and receiving the PUSCH based on the DCI.

Two SRS resource sets are configured based on the configuration information related to the SRS, and usages of the two SRS resource sets are configured as a codebook or a non-codebook.

A transmission scheme related to the PUSCH is configured as a codebook based transmission or a non-codebook based transmission based the configuration information.

The DCI includes at least one of i) an SRS resource set indicator field, ii) a first SRS resource indicator (SRI) field, and/or iii) a second SRS resource indicator (SRI) field.

A number of layers related to the PUSCH is larger than 4. The PUSCH is received based on antenna ports. The antenna ports are based on SRS ports related to one or more SRS resources indicated based on the DCI.

The antenna ports are determined based on i) at least one of eight first SRS ports related to a first SRS resource set and/or ii) at least one of eight second SRS ports related to a second SRS resource set.

A base station operating in a wireless communication system according to another embodiment of the present disclosure comprises one or more transceivers, one or more processors, and one or more memories operably connectable to the one or more processors, and storing instructions of configuring the one or more processors to perform operations based on being executed by the one or more processors.

The operations include transmitting configuration information related to a sounding reference signal (SRS), transmitting configuration information related to a physical uplink shared channel (PUSCH), transmitting downlink control information (DCI) for scheduling the PUSCH, and receiving the PUSCH based on the DCI.

Two SRS resource sets are configured based on the configuration information related to the SRS, and usages of the two SRS resource sets are configured as a codebook or a non-codebook.

A transmission scheme related to the PUSCH is configured as a codebook based transmission or a non-codebook based transmission based the configuration information.

The DCI includes at least one of i) an SRS resource set indicator field, ii) a first SRS resource indicator (SRI) field, and/or iii) a second SRS resource indicator (SRI) field.

A number of layers related to the PUSCH is larger than 4. The PUSCH is received based on antenna ports. The antenna ports are based on SRS ports related to one or more SRS resources indicated based on the DCI.

The antenna ports are determined based on i) at least one of eight first SRS ports related to a first SRS resource set and/or ii) at least one of eight second SRS ports related to a second SRS resource set.

### [ADVANTAGEOUS EFFECTS]

According to one embodiment of the present disclosure, a PUSCH based on up to 8 layers is scheduled based on existing fields (i.e., two SRI fields).

Therefore, PUSCH scheduling based on up to 8 layers can be supported based on an existing DCI payload size without increasing an overhead of an additional DCI payload. In other words, it is possible to prevent additional increase in the DCI payload to support the PUSCH scheduling based on up to 8 layers.

Further, a complexity in terms of user equipment (UE)/base station implementation required to support the PUSCH based on the up to 8 layers can be minimized.

Effects that could be achieved with the present disclosure are not limited to those that have been described hereinabove merely by way of example, and other effects and advantages of the present disclosure will be more clearly understood from the following description by a person skilled in the art to which the present disclosure pertains.

### [BRIEF DESCRIPTION OF THE DRAWINGS]

FIG. 1 is a flowchart showing one example of a UL BM procedure using an SRS.
FIG. 2 illustrates uplink transmission and reception to which a method proposed by the present disclosure may be applied.
FIG. 3 illustrates one example of a transmission and reception method for reliability enhancement using transmission in multiple TRPs.
FIG. 4 is a flowchart for describing a method performed by a user equipment (UE) according to one embodiment of the present disclosure.
FIG. 5 is a flowchart for describing a method performed by a base station according to another embodiment of the present disclosure.
FIG. 6 is a diagram illustrating configurations of a first device and a second device according to one embodiment of the present disclosure.

### [DETAILED DESCRIPTION]

Hereinafter, preferred embodiments of the disclosure are described in detail with reference to the accompanying drawings. The following detailed description taken in conjunction with the accompanying drawings is intended for describing example embodiments of the disclosure, but not for representing a sole embodiment of the disclosure. The detailed description below includes specific details to convey a thorough understanding of the disclosure. However, it will be easily appreciated by one of ordinary skill in the art that embodiments of the disclosure may be practiced even without such details.

In some cases, to avoid ambiguity in concept, known structures or devices may be omitted or be shown in block diagrams while focusing on core features of each structure and device.

Hereinafter, downlink (DL) means communication from a base station to a terminal and uplink (UL) means communication from the terminal to the base station. In the downlink, a transmitter may be part of the base station, and a receiver may be part of the terminal. In the uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

### SRS related operation

The UE may be configured with one or more Sounding Reference Symbol (SRS) resource sets configured by (higher layer parameter) SRS-ResourceSet (through higher layer signaling, RRC signaling, etc.). For each SRS resource set, the UE may be configured with K (≥ 1) SRS resources (higher later parameter SRS-resources). Here, K is a natural number and a maximum value of K is indicated by SRS_capability.

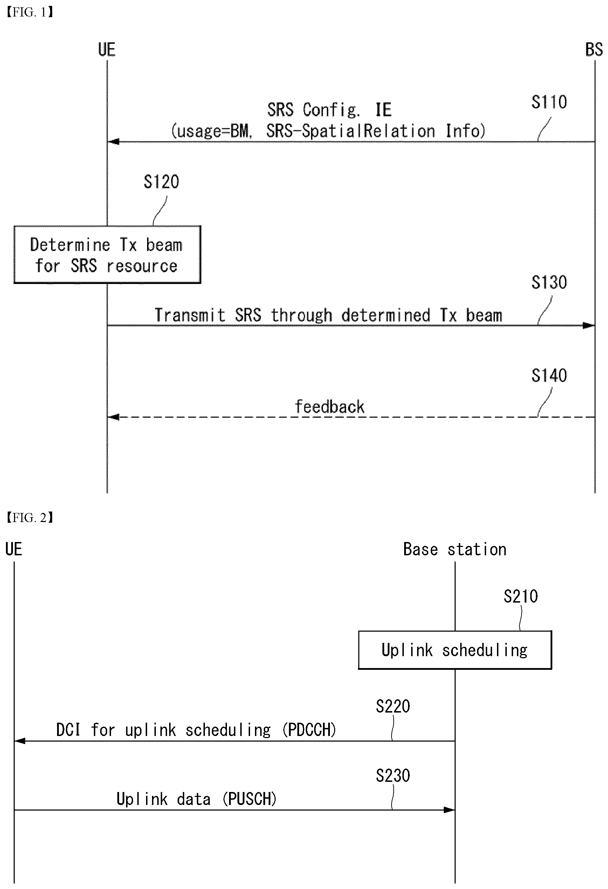

FIG. 1 is a flowchart showing one example of a UL BM procedure using an SRS.
- The UE receives, from the BS, RRC signaling (e.g., SRS-Config IE) including a usage parameter (S110). As an example, the usage parameter may be configured as 'beam management', 'codebook', 'nonCodebook', or 'antennaSwitching'.

Table 1 shows one example of SRS-Config Information Element (IE) and SRS-Config IE is used for an SRS transmission configuration. SRS-Config IE includes a list of SRS-Resources and a list of SRS-ResourceSets. Each SRS resource set means a set of SRS-resources.

The network may trigger transmission of the SRS resource set by using configured aperiodicSRS-ResourceTrigger (L1 DCI).

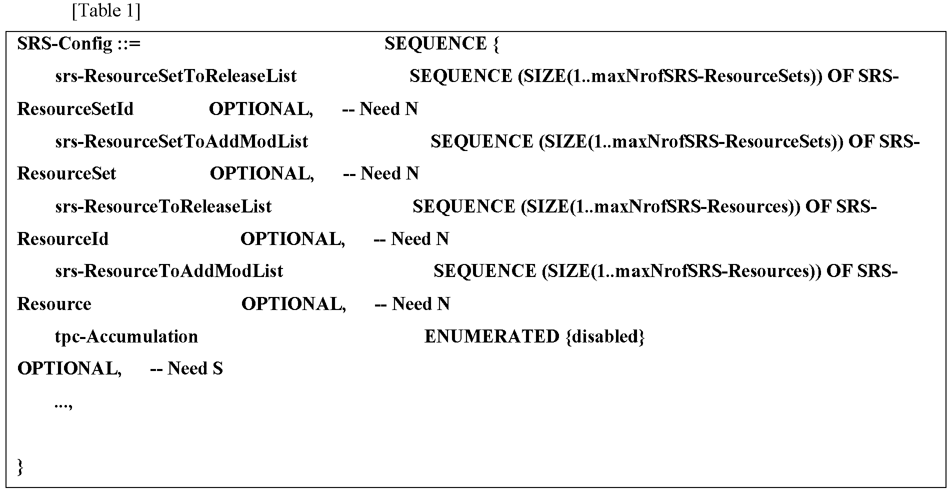

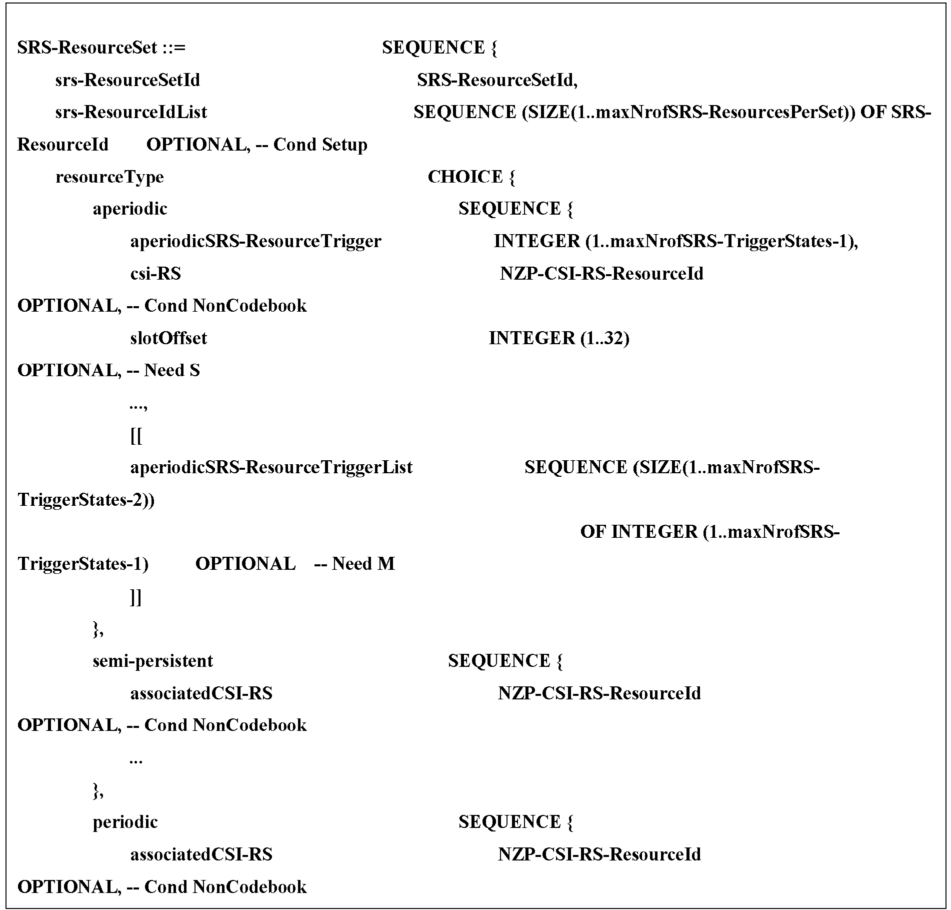

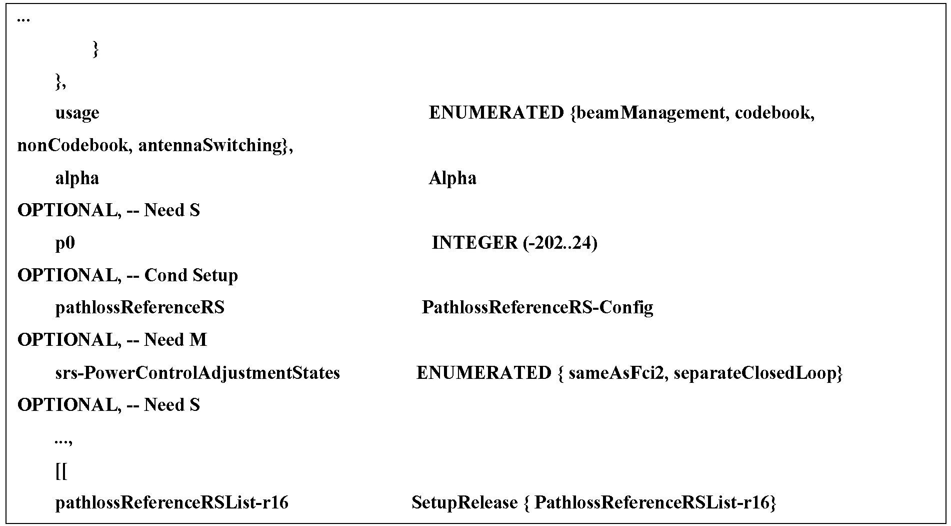

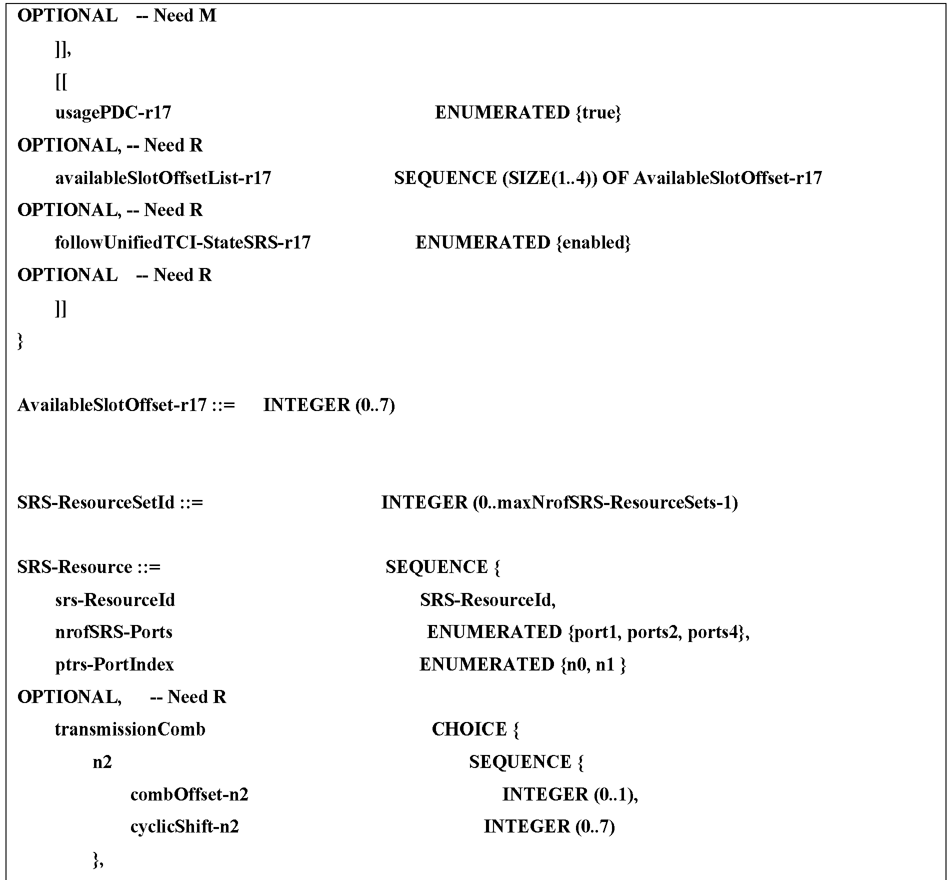

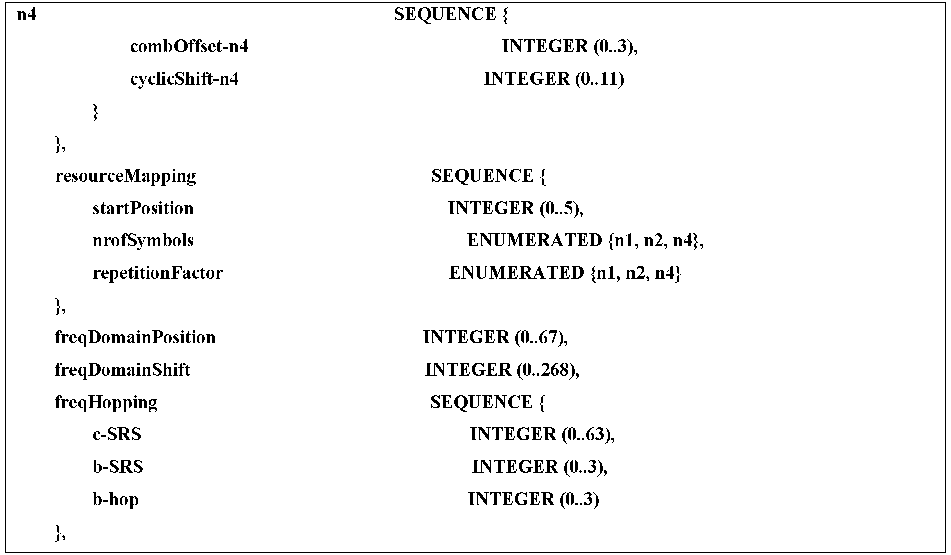

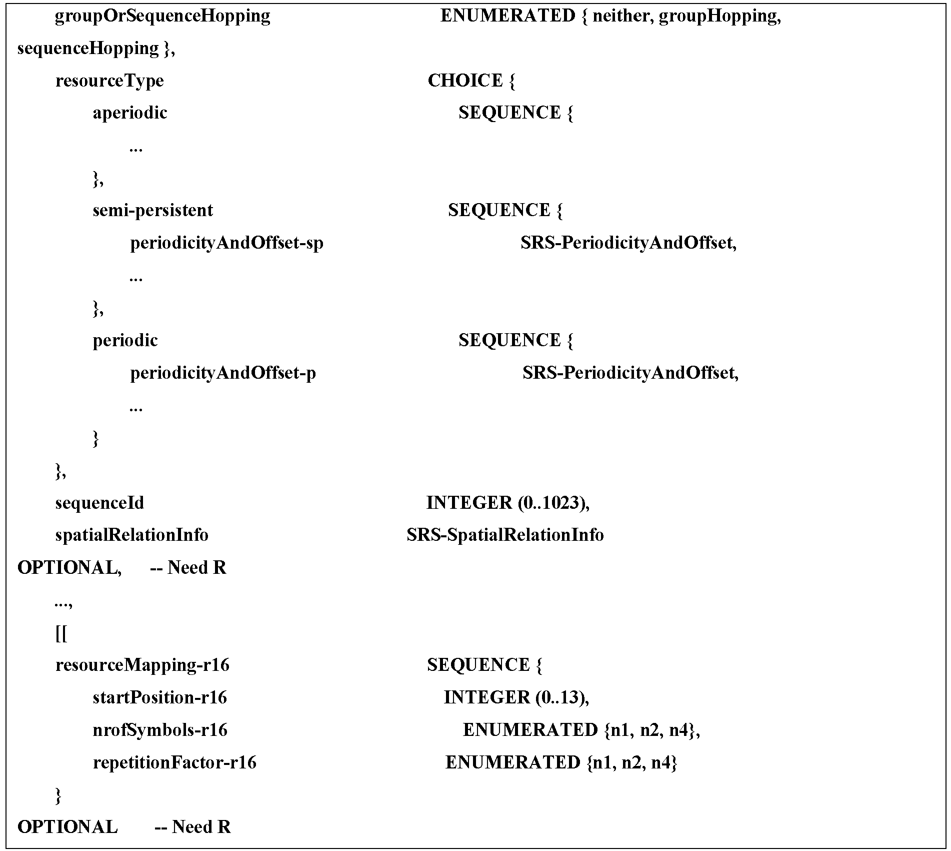

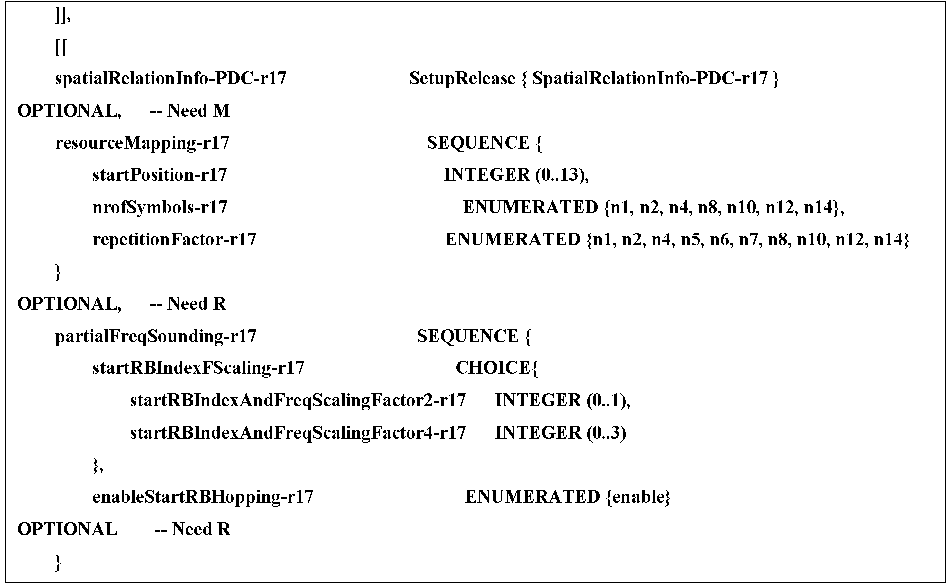

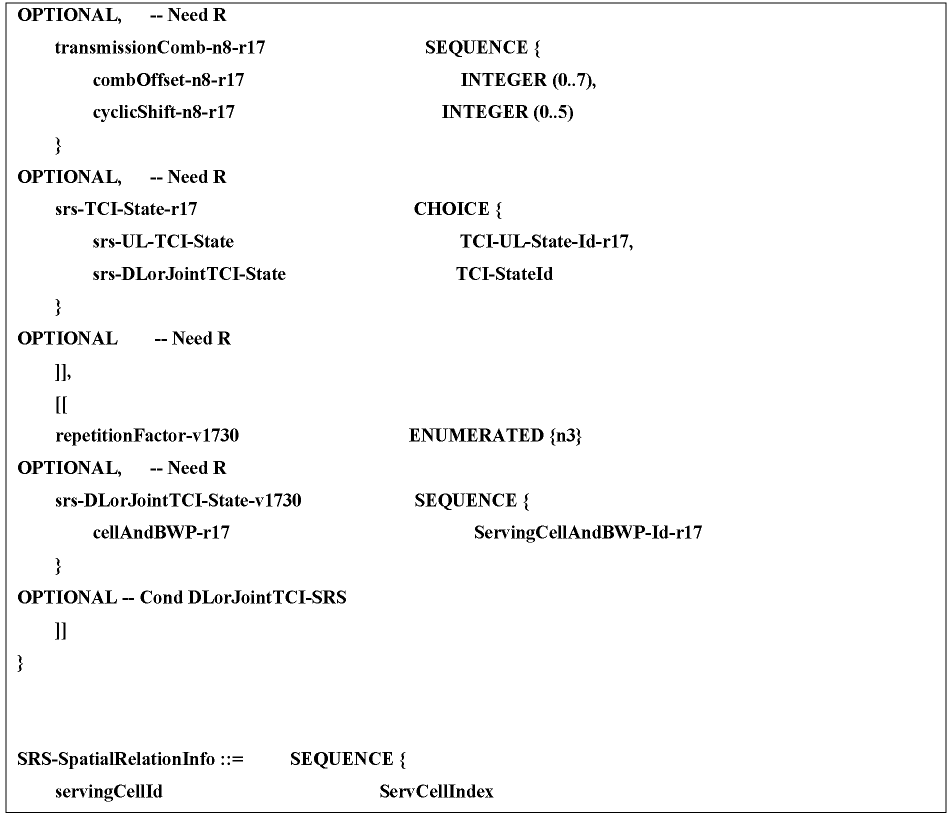

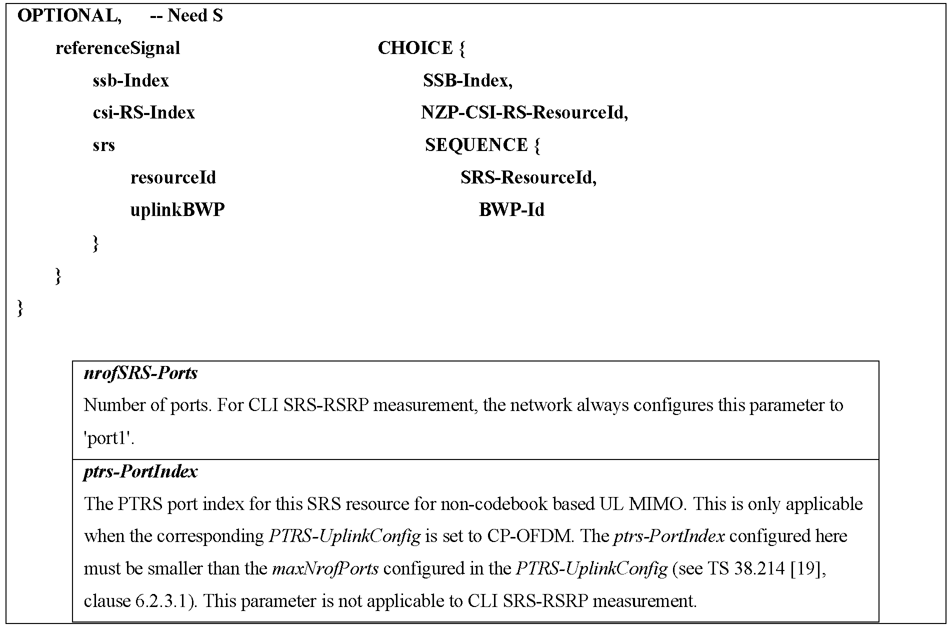

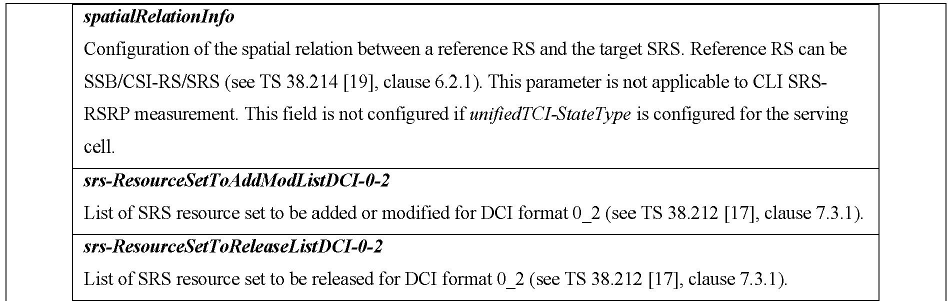

In Table 1, usage represents a higher layer parameter indicating whether the SRS resource set is used for the beam management or whether the SRS resource set is used for codebook based or non-codebook based transmission. 'spatialRelationInfo' is a parameter representing a configuration of a spatial relation between a reference RS and a target SRS. Here, the reference RS may become SSB, CSI-RS, or SRS corresponding to L1 parameter 'SRS-SpatialRelationInfo'. The usage is configured for each SRS resource set.
- The UE determines a Tx beam for an SRS resource to be transmitted based on SRS-SpatialRelation Info included in the SRS-Config IE (S120). Here, SRS-SpatialRelation Info is configured for each SRS resource and represents a beam which is the same as the beam used in the SSB, the CSI-RS, or the SRS is to be applied for each SRS resource. Further, SRS-SpatialRelationInfo may be configured or not configured in each SRS resource.
- If SRS-SpatialRelationInfo is configured in the SRS resource, SRS-SpatialRelationInfo is transmitted by applying the beam which is the same as the beam used in the SSB, the CSI-RS, or the SRS. However, if SRS-SpatialRelationInfo is not configured in the SRS resource, the UE arbitrarily determines the Tx beam and transmits the SRS through the determined Tx beam (S130).
- Additionally, the UE may receive or not receive a feedback for the SRS from the BS (S140).

FIG. 2 is a flowchart showing an example of an uplink transmission/reception operation to which a method proposed in the present disclosure may be applied.

Referring to FIG. 2, the eNB schedules uplink transmission such as the frequency/time resource, the transport layer, an uplink precoder, the MCS, etc., (S210). In particular, the eNB may determine a beam for PUSCH transmission of the UE through the aforementioned operations.

The UE receives DCI for downlink scheduling (i.e., including scheduling information of the PUSCH) on the PDCCH (S220).

DCI format 0_0 or 0_1 may be used for the uplink scheduling and in particular, DCI format 0_1 includes the following information.

Identifier for DCI formats, UL/Supplementary uplink (SUL) indicator, Bandwidth part indicator, Frequency domain resource assignment, Time domain resource assignment, Frequency hopping flag, Modulation and coding scheme (MCS), SRS resource indicator (SRI), Precoding information and number of layers, Antenna port(s), SRS request, DMRS sequence initialization, and Uplink Shared Channel (UL-SCH) indicator.

In particular, configured SRS resources in an SRS resource set associated with higher layer parameter 'usage' may be indicated by an SRS resource indicator field. Further, 'spatialRelationInfo' may be configured for each SRS resource and a value of 'spatialRelationInfo' may be one of {CRI, SSB, and SRI}.

The UE transmits the uplink data to the eNB on the PUSCH (S230).

When the UE detects a PDCCH including DCI format 0_0 or 0_1, the UE transmits the corresponding PUSCH according to the indication by the corresponding DCI.

Two transmission schemes, i.e., codebook based transmission and non-codebook based transmission are supported for PUSCH transmission:
i) When higher layer parameter txConfig' is set to 'codebook', the UE is configured to the codebook based transmission. On the contrary, when higher layer parameter txConfig' is set to 'nonCodebook', the UE is configured to the non-codebook based transmission. When higher layer parameter 'txConfig' is not configured, the UE does not predict that the PUSCH is scheduled by DCI format 0_1. When the PUSCH is scheduled by DCI format 0_0, the PUSCH transmission is based on a single antenna port.
   In the case of the codebook based transmission, the PUSCH may be scheduled by DCI format 0_0, DCI format 0_1, DCIformat 0_2, or semi-statically. When the PUSCH is scheduled by DCI format 0_1, the UE determines a PUSCH transmission precoder based on the SRI, the Transmit Precoding Matrix Indicator (TPMI), and the transmission rank from the DCI as given by the SRS resource indicator and the Precoding information and number of layers field. The TPMI is used for indicating a precoder to be applied over the antenna port and when multiple SRS resources are configured, the TPMI corresponds to the SRS resource selected by the SRI. Alternatively, when the single SRS resource is configured, the TPMI is used for indicating the precoder to be applied over the antenna port and corresponds to the corresponding single SRS resource. A transmission precoder is selected from an uplink codebook having the same antenna port number as higher layer parameter 'nrofSRS-Ports'. When the UE is configured to higher layer parameter 'txConfig' set to 'codebook', at least one SRS resource is configured in the UE. An SRI indicated in slot n is associated with most recent transmission of the SRS resource identified by the SRI and here, the SRS resource precedes PDCCH (i.e., slot n) carrying the SRI.
ii) In the case of the non-codebook based transmission, the PUSCH may be scheduled by DCI format 0_0, DCI format 0_1, or semi-statically. When multiple SRS resources are configured, the UE may determine the PUSCH precoder and the transmission rank based on a wideband SRI and here, the SRI is given by the SRS resource indicator in the DCI or given by higher layer parameter 'srs-ResourceIndicator'. The UE may use one or multiple SRS resources for SRS transmission and here, the number of SRS resources may be configured for simultaneous transmission in the same RB based on the UE capability. Only one SRS port is configured for each SRS resource. Only one SRS resource may be configured to higher layer parameter 'usage' set to 'nonCodebook'. The maximum number of SRS resources which may be configured for non-codebook based uplink transmission is 4. The SRI indicated in slot n is associated with most recent transmission of the SRS resource identified by the SRI and here, the SRS transmission precedes PDCCH (i.e., slot n) carrying the SRI.

### Multi-Transmission/Reception Point (TRP) related operation

An M-TRP transmission scheme in which M TRPs transmit data to one user equipment (UE) may be largely divided into two types, eMBB M-TRP transmission which is a scheme for increasing a transmission rate and URLLC M-TRP transmission which is a scheme for increasing a reception success rate and reducing latency.

### <MTRP URLLC related description>

UL MTRP-URLLC means that multiple TRPs receive the same data/UCI from one UE using different layer/time/frequency resources. For example, TRP 1 receives the same data/UCI from UE in resource 1, and TRP 2 receives the same data/UCI from UE in resource 2, and then shares the received data/UCI through the backhaul link connected between TRPs. A UE configured with the UL MTRP-URLLC transmission scheme transmits the same data/DCI using different layer/time/frequency resources. At this time, the UE is indicated by the BS which Tx beam and which Tx power (i.e., UL TCI state) to use in the layer/time/frequency resources transmitting the same data/DCI. For example, when the same data/UCI is transmitted in resource 1 and resource 2, the UL TCI state used by resource 1 and the UL TCI state used by resource 2 are indicated. The UL MTRP URLLC may be applied to the PUSCH/PUCCH.

### <SDCI or MDCI based MTRP transmission related description>

Further, in terms of downlink control information (DCI) transmission, the multiple (M)-TRP transmission scheme may be divided into i) a multiple (M)-DCI based M-TRP transmission scheme in which each TRP transmits different DCI and ii) a single (S)-DCI based M-TRP transmission scheme in which one TRP transmits the DCI. As one example, in the case of the S-DCI, since all scheduling information for data transmitted by M TRPs should be delivered through one DCI, the S-DCI may be used in an ideal backhaul (BH) environment in which two TRPs may be dynamically coordinated with each other.

The UE may recognize PUSCH (or PUCCH) scheduled by DCI received by different CORESETs (or CORESETs which belong to different CORESET groups) as PUSCH (or PUCCH) transmitted to different TRPs or PUSCH (or PUCCH) of different TRPs. Further, a scheme for UL transmission (e.g., PUSCH/PUCCH) transmitted to different TRPs may be applied equally even to UL transmission (e.g., PUSCH/PUCCH) transmitted to different panels which belong to the same TRP.

### <R17 NR MTRP transmission related description>

The R17 NR standard supports MTRP PDCCH repeat transmission, MTRP PDCCH/PDSCH SFN transmission, S-DCI based MTRP PUSCH repeat transmission, and single PUCCH resource based MTRP PUCCH repeat transmission. All of these transmission techniques repeatedly transmit the same contents (i.e., DCI or UL TB or UCI) with URLLC target enhancement to increase reliability. In case of MTRP PDCCH repeat transmission, the MTRP PDCCHs are TDM or FDM, and repeatedly transmitted, MTRP PDCCH/PDSCH SFN is repeatedly transmitted in the same time/frequency/layer, in S-DCI based MTRP PUSCH repeat transmission, S-DCI based MTRP PUSCH is TDM and repeatedly transmitted, and in single PUCCH resource based MTRP PUCCH repeat transmission, single PUCCH resource based MTRP PUCCH is TDM and repeatedly transmitted.

### - Rel-17 S-DCI based MTRP PUSCH repeated transmission

In the R17 NR standard, the base station configures two SRS sets for the UE for S-DCI based MTRP PUSCH transmission, and the respective sets are used to indicate UL Tx port and UL beam/QCL information toward TRP 1 and TRP 2, respectively. Additionally, the base station may perform an SRS resource indication for each SRS set through two SRI fields in one DCI, and indicate up to two PC parameter sets. For example, a first SRI field may indicate an SRS resource and a PC parameter set defined in set 0, and a second SRI field may indicate an SRS resource and a PC parameter set defined in set 1. The UE is indicated with the UL Tx port, PC parameter set, and UL beam/QCL information toward TRP 1 through the first SRI field, and performs PUSCH transmission at TO corresponding to set 0. Similarly, the UE is indicated with the UL Tx port, PC parameter set, and UL beam/QCL information toward TRP 2 through the second SRI field, and performs the PUSCH transmission at TO corresponding to set 1.

### <Meaning of TCI state/ beam indication>

Further, hereinafter, in methods proposed by the present disclosure, using (mapping) a specific TCI state (or TCI) when receiving data/DCI/UCI for a certain frequency/time/spatial resource may mean estimating a channel from a DMRS using a QCL type and a QCL RS indicated by a corresponding DL TCI state in the frequency/time/spatial resource in the case of DL, and receiving/demodulating data/DCI with the estimated channel. Using (mapping) the specific TCI state (or TCI) when receiving data/DCI/UCI for the certain frequency/time/spatial resource may mean transmitting/modulating the DMRS and data/UCI by using a Tx beam and/or Tx power indicated by a corresponding UL TCI state in the case of UL.

The UL TCI state may contain Tx beam or Tx power information of the UE, and spatial relation info may also be configured to the UE through other parameters instead of the TCI state. The UL TCI state may be directly indicated to UL grant DCI, or may mean spatial relation info of the SRS resource indicated through the SRI field of the UL grant DCI. Alternatively, the UL TCI state may mean OL Tx power control parameters (j: index for open loop parameters Po & alpha (maximum 32 parameter value sets per cell), q_d: index of DL RS resource for PL measurement (maximum 4 measurements per cell), and 1: closed loop power control process index (maximum 2 processes per cell)) connected to a value indicated through the SRI field of the UL grant DCI. Alternatively, in R17 NR, UL TCI may be indicated using DL grant DCI.

The base station described in the present disclosure may be a general term for an object that performs data transmission and reception with the UE. For example, the BS described in the present disclosure may be a concept including one or more transmission points (TPs), one or more transmission and reception points (TRPs), etc. For example, the multiple TPs and/or multiple TRPs described herein may be included in a single base station or may be included in multiple base stations. Further, the TP and/or TRP may include a panel of the BS, a transmission and reception unit, etc.

Additionally, a TRP as described herein may mean an antenna array having one or more antenna elements available to a network located at a specific geographical location in a specific area. In the present disclosure, for convenience of description, , "TRP" is used as a reference, however, the TRP may be replaced, and appreciated/applied as a base station, a transmission point (TP), a cell (e.g., macro cell/small cell/pico cell), an antenna array, or a panel, and appreciated.

### Method for improving reliability in Multi-TRPs

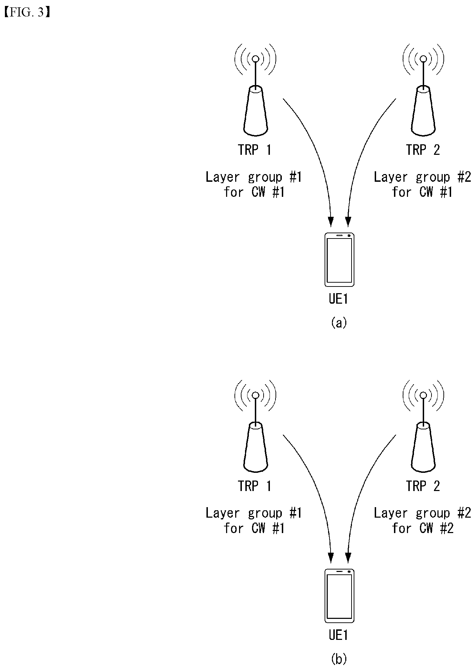

FIG. 3 illustrates an example of a transmission/reception method for improving reliability using transmission in multiple TRPs.

The example in (a) of FIG. 3 shows that a layer group transmitting the same codeword (CW)/transport block (TB) correspond to different TRPs. That is, the same CW may be transmitted through different layers/layer groups. In this case, a layer group may refer to some kind of layer set made up of one or more layers.

The example in (b) of FIG. 3 shows an example in which different CWs are transmitted through layer groups corresponding to different TRPs. That is, different CWs may be transmitted through different layers/layer groups. In this case, it may be assumed that TBs corresponding to the first CW (CW #1) and the second CW (CW #2) are the same. Therefore, this can be seen as an example of repeated transmission of the same TB.

In (a) of FIG. 3 or (b) of FIG. 3, the same TB is repeatedly transmitted through different layer groups, and each layer group is transmitted by different TRPs/panels, thereby increasing the data reception probability, which may be called spatial division multiplexing (SDM)-based URLLC M-TRP transmission. A layer(s) belonging to different layer groups are transmitted through DMRS ports belonging to different DMRS CDM groups, respectively.

In addition, although the above description regarding multiple TRPs has been given with respect to a spatial division multiplexing (SDM) scheme using different layers, it also may be extensively applied to a frequency division multiplexing (FDM) scheme based on different frequency domain resources (e.g., RB/PRB (set)), and/or a time division multiplexing (TDM) scheme based on different time domain resources (e.g., slots, symbols, and sub-symbols).

The contents described above may be applied in combination with methods proposed in the present disclosure to be described below or may be supplemented to clarify technical features of the methods proposed in the present disclosure. Methods to be described below are just distinguished for convenience of description and it is needless to say that some components of any one method may be substituted with some components of another method or may be applied in combination with each other.

According to 3GPP standards up to NR Rel-17, a maximum number of uplink Tx antennas of the UE is 4, and up to 4 layers are supported for data transmission (PUSCH). In the Rel-18 RAN1 MIMO discussion, standardization will be carried out to support data transmission exceeding 4 layers by utilizing 8 Tx antennas, considering not only hand-held terminals but also terminals such as customer premises equipment (CPE)/fixed wireless access (FWA)/vehicles/industrial devices.

Accordingly, enhancements will be made to transmit up to 8 layers in both codebook-based transmission and non-codebook-based transmission, which are PUSCH transmission schemes of NR.

For codebook-based transmission, an uplink codebook supporting 8 ports may be newly introduced in the standardization process. In non-codebook based transmission, in addition to up to 4 (non-codebook based) SRS resources, up to 8 SRS resources may need to be indicated through the SRS resource indicator (SRI) used for existing up to 4 layer PUSCH scheduling. However, the SRI field size of the existing UL grant DCI may be insufficient to indicate a combination of up to 8 SRS resources for a single PUSCH, and an excessively large SRI field size may be required to support all combinations.

Currently, the SRI field codepoint configuration of the UL grant DCI for non-codebook based transmission may be determined by the RRC parameter settings (Lmax, Nsrs) as follows.

Here, Lmax is given by a field/parameter (e.g., maxMIMO-Layers) indicating the maximum number of MIMO layers used for the PUSCH within all BWPs of that uplink of that serving cell within a configuration (e.g., PUSCH-ServingCellConfig) to specify common UE-specific PUSCH parameters across BWPs of the UE within the serving cell. When the parameter is not set, Lmax is given by the maximum number of layers of the PUSCH supported by the UE for the serving cell for the non-codebook based operation.

Additionally, Nsrs is a number of SRS resources set within the SRS resource set indicated by an SRS resource set indicator, if the SRS resource set indicator exists. Otherwise, the higher layer parameter indicating the usage of the SRS (e.g., usage) has a value of 'nonCodeBook' and is associated with the higher layer parameter and is a number of SRS resources set within the SRS resource configured by the higher layer signaling.

Table 2 below illustrates an SRI indication for non-codebook based PUSCH transmission in the case of Lmax = 1.

**[Table 2]**

| Bit field mapped to index | SRI(s), *N* _{SRS} = 2 | Bit field mapped to index | SRI(s), *N* _{SRS} = 3 | Bit field mapped to index | SRI(s), *N* _{SRS} = 4 |
|---|---|---|---|---|---|
| 0 | 0 | 0 | 0 | 0 | 0 |
| 1 | 1 | 1 | 1 | 1 | 1 |
| | | 2 | 2 | 2 | 2 |
| | | 3 | reserved | 3 | 3 |

Table 3 below illustrates an SRI indication for the non-codebook based PUSCH transmission in the case of Lmax = 2.

**[Table 3]**

| Bit field mapped to index | SRI(s), *N* _{SRS} = 2 | Bit field mapped to index | SRI(s), *N* _{SRS} = 3 | Bit field mapped to index | SRI(s), *N* _{SRS} = 4 |
|---|---|---|---|---|---|
| 0 | 0 | 0 | 0 | 0 | 0 |
| 1 | 1 | 1 | 1 | 1 | 1 |
| 2 | 0,1 | 2 | 2 | 2 | 2 |
| 3 | reserved | 3 | 0,1 | 3 | 3 |
| | | 4 | 0,2 | 4 | 0,1 |
| | | 5 | 1,2 | 5 | 0,2 |
| | | 6-7 | reserved | 6 | 0,3 |
| | | | | 7 | 1,2 |
| | | | | 8 | 1,3 |
| | | | | 9 | 2,3 |
| | | | | 10-15 | reserved |

Table 4 below illustrates an SRI indication for the non-codebook based PUSCH transmission in the case of Lmax = 3.

**[Table 4]**

| Bit field mapped to index | SRI(s), *N* _{SRS} = 2 | Bit field mapped to index | SRI(s), *N* _{SRS} = 3 | Bit field mapped to index | SRI(s), *N* _{SRS} = 4 |
|---|---|---|---|---|---|
| 0 | 0 | 0 | 0 | 0 | 0 |
| 1 | 1 | 1 | 1 | 1 | 1 |
| 2 | 0,1 | 2 | 2 | 2 | 2 |
| 3 | reserved | 3 | 0,1 | 3 | 3 |
| | | 4 | 0,2 | 4 | 0,1 |
| | | 5 | 1,2 | 5 | 0,2 |
| | | 6 | 0,1,2 | 6 | 0,3 |
| | | 7 | reserved | 7 | 1,2 |
| | | | | 8 | 1,3 |
| | | | | 9 | 2,3 |
| | | | | 10 | 0,1,2 |
| | | | | 11 | 0,1,3 |
| | | | | 12 | 0,2,3 |
| | | | | 13 | 1,2,3 |
| | | | | 14-15 | reserved |

Table 5 below illustrates an SRI indication for the non-codebook based PUSCH transmission in the case of Lmax = 4.

**[Table 5]**

| Bit field mapped to index | SRI(s), *N* _{SRS} = 2 | Bit field mapped to index | SRI(s), *N* _{SRS} = 3 | Bit field mapped to index | SRI(s), *N* _{SRS} = 4 |
|---|---|---|---|---|---|
| 0 | 0 | 0 | 0 | 0 | 0 |
| 1 | 1 | 1 | 1 | 1 | 1 |
| 2 | 0,1 | 2 | 2 | 2 | 2 |
| 3 | reserved | 3 | 0,1 | 3 | 3 |
| | | 4 | 0,2 | 4 | 0,1 |
| | | 5 | 1,2 | 5 | 0,2 |
| | | 6 | 0,1,2 | 6 | 0,3 |
| | | 7 | reserved | 7 | 1,2 |
| | | | | 8 | 1,3 |
| | | | | 9 | 2,3 |
| | | | | 10 | 0,1,2 |
| | | | | 11 | 0,1,3 |
| | | | | 12 | 0,2,3 |
| | | | | 13 | 1,2,3 |
| | | | | 14 | 0,1,2,3 |
| | | | | 15 | reserved |

As shown in Table 5 above, 15 entries are required to support all combinations of 4 SRS resource indicators (SRIs) to support up to 4 layers, so an SRI field of up to 4 bits is defined for the non-codebook based transmission. If 8 SRIs are supported to support up to 8 layers, the existing SRI field size may not be enough to support all combinations of the 8 SRIs, and may require too many bits.

The present disclosure proposes a method for supporting up to 8 layer transmission by utilizing 8 Tx antennas in uplink transmission of a UE, and a method for configuring/indicating up to 8 layer scheduling for the UE of a base station, and performing subsequent UE uplink transmission based on the problem.

In the present disclosure, 'I' may be interpreted as 'and', 'or', or "and/or" according to a context.

Hereinafter, in the present disclosure, "transmission of an SRS resource set" may be used as the same meaning as "transmission of an SRS based on information set in the SRS resource set". Additionally, "transmitting an SRS resource" or "transmitting SRS resources" may be used interchangeably with "transmitting an SRS or SRSs based on information configured in an SRS resource".

In Rel-17 MIMO, for M-TRP PUSCH transmission based on single DCI (S-DCI), enhancements are made to apply different beams (i.e., spatialRelationInfo) and different power control (PC) parameter sets to each PUSCH transmission occasion (TO: transmission occasion) (or TO group) for each TRP. Here, it has been improved to be able to configure up to two CB (codebook)/NCB (non-codebook) based SRS resource sets to apply different beams/PCs (up to Rel-16, a maximum of one SRS resource set may be configured). In addition, enhancement is performed to expand the SRI field in the UL grant DCI to two so that the base station may indicate the SRI (i.e., indicating the beam and PC) corresponding to each target TRP during CB/NCB based UL transmission.

A new SRS resource set indication field is also introduced in the UL grant DCI to indicate a method for utilizing the two SRI fields, as shown in Table 6 below.

**[Table 6]**

| Bit field mapped to index | SRS resource set indication |
|---|---|
| 0 | SRS resource indicator field and Precoding information and number of layers field are associated with the first SRS resource set; |
| | Second SRS resource indicator field and Second Precoding information field are reserved. |
| 1 | SRS resource indicator field and Precoding information and number of layers field are associated with the second SRS resource set; |
| | Second SRS resource indicator field and Second Precoding information field are reserved. |
| 2 | SRS resource indicator field and Precoding information and number of layers field are associated with the first SRS resource set; |
| | Second SRS resource indicator field and Second Precoding information field are associated with the second SRS resource set. |
| 3 | SRS resource indicator field and Precoding information and number of layers field are associated with the first SRS resource set; |
| | Second SRS resource indicator field and Second Precoding information field are associated with the second SRS resource set. |
| NOTE 1: The first and the second SRS resource sets are respectively the ones with lower and higher *srs-ResourceSetId* of the two SRS resources sets configured by higher layer parameter *srs-ResourceSetToAddModList* or *srs-ResourceSetToAddModListDCI-0-2,* and associated with the higher layer parameter *usage* of value *'nonCodeBook'* if *txConfig=nonCodebook or 'codebook'* if *txConfig=codebook.* When only one SRS resource set is configured by higher layer parameter *srs-ResourceSetToAddModList* or *srs-ResourceSetToAddModListDCI-0-2,* and associated with the higher layer parameter usage of value *'codeBook' or 'nonCodeBook'* respectively, the first SRS resource set is the SRS resource set. The association of the first and second SRS resource sets to PUSCH repetitions for each bit field index value is as defined in Clause 6.1.2.1 of [6, TS 38.214]. | |
| NOTE 2: For DCI format 0_2, the first and second SRS resource sets configured by higher layer parameter *srs-ResourceSetToAddModListDCI-0-2* are composed of the first *N_{SRS,0 2}* SRS resources together with other configurations in the first and second SRS resource sets configured by higher layer parameter *srs-ResourceSetToAddModlList,* if any, and associated with the higher layer parameter *usage* of value *'codeBook'* or *'nonCodeBook',* respectively, except for the higher layer parameters *'srs-ResourceSetId' and 'srs-ResourceIdList'.* | |

When DCI format 0_1 or DCI format 0_2 indicates codepoint '10' for the SRS resource set indication field (in case of bit field 2 in Table 6), an association of the first and second SRS resource sets with K consecutive slots is determined as follows:
- When K = 2, the first and second SRS resource sets are applied to first and second slots of two consecutive slots, respectively.
- When K > 2 and cyclicMapping in PUSCH-Config is enabled, the first and second SRS resource sets are applied to the first and second slots of K consecutive slots, respectively, and a same SRS resource set mapping pattern continues in remaining slots of K consecutive slots.
- When K > 2 and sequentialMapping in PUSCH-Config is enabled, the first SRS resource set is applied to the first and second slots of the K consecutive slots, the second SRS resource set is applied to third and fourth slots of the K consecutive slots, and the same SRS resource set mapping pattern continues in the remaining slots of the K consecutive slots.

Further, when DCI format 0_1 or DCI format 0_2 indicates codepoint "11" for the SRS resource set indication field (in case of bit field 3 in Table 6), an association of the first and second SRS resource sets with K consecutive slots is determined as follows:
- When K = 2, the second and first SRS resource sets are applied to the first and second slots of two consecutive slots, respectively.
- When K > 2 and cyclicMapping in PUSCH-Config is enabled, the second and first SRS resource sets are applied to the first and second slots of K consecutive slots, respectively, and the same SRS resource set mapping pattern continues in remaining slots of K consecutive slots.
- When K > 2 and sequentialMapping in PUSCH-Config is enabled, the second SRS resource set is applied to the first and second slots of the K consecutive slots, the first SRS resource set is applied to the third and fourth slots of the K consecutive slots, and the same SRS resource set mapping pattern continues in the remaining slots of the K consecutive slots.

Hereinafter, the present disclosure proposes a method for supporting 8 Tx UL transmission when there is one SRI field in the UL grant DCI mainly in the non-codebook (NCB) based transmission, but the present disclosure may be equally applied to codebook (CB) based transmission and/or when there are two SRI fields in the DCI.

### Proposal 1

Hereinafter, a method for configuring/indicating PUSCH transmission of rank 4 or higher and layer 4 or higher by allowing a configuration of multiple SRS ports for an SRS resource configured in an SRS resource set for the non-codebook (NCB) usage will be described.

### Proposal 1-1

It may be stipulated/defined that two or more ports are enabled to be configured for the SRS resource configured within the SRS resource set for the non-codebook (NCB) usage. Further, in order to support PUSCH scheduling of rank 5 or higher, it may be stipulated/defined to (continuously) configure/indicate two (or/and two or more) SRS resources.

For example, combinations of port numbers for the two (or/and two or more) SRS resources may be defined/stipulated/configured as follows:
- Rank 5: 3 port resource + 2 port resource and/or 4 port resource + 1 port resource
- Rank 6: 4 port resource + 2 port resource and/or 3 port resource + 3 port resource
- Rank 7: 4 port resource + 3 port resource
- Rank 8: supported only with two 4 port resource

By defining/stipulating/configuring the SRS resource combinations for supporting the PUSCH transmission of rank 5 or higher as above, only a limited combination of SRIs may be mapped/connected to the SRI field for PUSCH indication of rank 5 or higher. Therefore, the base station may perform the PUSCH scheduling of rank 5 or higher through the SRI field without reusing the existing SRI field size in the same manner or without significantly increasing the size from the existing size.

### Proposal 1-2

A maximum of 2 ports may be configured for the SRS resource configured within the SRS resource set for the non-codebook (NCB) usage. By enabling the max of 2 ports to be configured for the existing SRS resource for the NCB usage in which a configuration of a max of 1 port is a maximum configuration, up to 4 2 port SRS resources may be configured within the SRS resource set for the NCB usage. Therefore, it is possible to support a max of 8 ports (and/or a max of 8 layers) PUSCH by utilizing only the size of the existing SRI field.

In this case, according to a legacy operation, the UE calculates a precoder of each 1-port SRS resource based on an associated CSI-RS configured in the SRS resource set by utilizing a maximum of 4 1-port SRS resources. The UE transmits the SRS resource for the NCB usage based on the corresponding precoder. However, in the embodiment, the UE may calculate a 1-port precorder for a 1-port SRS resource, and the UE calculates a 2-port precoder for a 2-port SRS resource, according to a configuration.

Here, when there is the 2-port SRS resource in the SRS resource set for the NCB usage, the base station may intend to indicate an SRI corresponding to the 2-port SRS resource through the DCI upon scheduling the PUSCH, and utilize only 1 port of the 2 ports of the SRS resource for the PUSCH scheduling. In order to solve such a problem, options described below may be utilized for the PUSCH scheduling of the base station.

### Option 1)

In addition to the SRI field of the UL grant DCI, the base station may use an additional 1 or 2 bits to indicate whether to utilize both 2 ports or only 1 port for the 2-port SRS resource within the SRS resource set for the NCB usage when indicating the SRI. Here, if an additional 1 bit is utilized, a value of the 1 bit may be set/defined, for example, the value of the 1 bit may be set as in "0" = "Both 2 ports are used for PUSCH transmission", "1" = "Only 1 port that is predefined/preconfigured among 2 ports is used for PUSCH transmission". In this case, the above predefined/preconfigured 1 port may correspond to a lowest/highest port (i.e., port index). If additional 2 bits are utilized, a value of the 2 bits may be set/defined as, for example, the value of the 2 bits may be set as in "0" = "Neither 2 ports are used for PUSCH transmission", "01" = "The lowest/first port among the 2 ports is used for PUSCH transmission", "10" = "The highest/second port among the 2 ports is used for PUSCH transmission", and "11" = "Both 2 ports are used for the PUSCH transmission".

### Option 2)

The base station may drop any one port for a specific 2-port SRS resource within the SRS resource set for the NCB usage when indicating the SRI through the additional bit in addition to the SRI field of the UL grant DCI. For example, the additional 1 bit may be set/defined as in "0" = "Use both ports for PUSCH transmission for a specific resource among (SRI-indicated) 2-port SRS resources" and "1" = "Drop the lowest/highest port(/layer) for a specific resource among (SRI-indicated) 2-port SRS resources and use only 1 port for the PUSCH transmission".

### Option 3)

The base station may drop any one port for a specific 2-port SRS resource within the SRS resource set for the NCB usage when indicating the SRI through an additional 1 bit in addition to the SRI field of the UL grant DCI. As a result, when the SRS resource for the NCB usage is configured only with the 2-port SRS resource, the SRI may be indicated to support odd layers. For example, the additional 1 bit may be set/defined as in "0" = "Use both 2 ports for a specific resource among (SRI-indicated) 2-port SRS resources for PUSCH transmission" and "1" = "Drop the lowest/highest port(/layer) for a specific resource among (SRI-indicated) 2-port SRS resources, and then use only 1 port for the PUSCH transmission".

### Proposal 1-3

(Max) 4 ports may be configured for a specific SRS resource configured within the SRS resource set for the non-codebook (NCB) usage. The base station may perform a max 8 port SRI indication by configuring up to 4 additional 1-port SRS resources in the SRS resource set for the NCB usage. The 4-port SRS resource may be i) utilized for up to 4 layer PUSCH transmission, or ii) utilized for more than 4 layer PUSCH transmission. A field may be separately present/defined in the UL grant DCI to indicate which port(s) among the 4 ports for the 4-port SRS resource to schedule for PUSCH transmission (SRI indication may be performed with the existing SRI field for the remaining 4 1-port SRS resources).

In the case of Method i above (i.e., up to 4 layer PUSCH), if the base station does not want to indicate a PUSCH exceeding 4 layers, the remaining 4 1-port SRS resources may not be configured. This allows saving the DCI payload of the existing SRI field. At this time, PUSCH scheduling may be performed using only the separate field.

In the case of Method ii above (i.e., more than 4 layer PUSCH), if the base station does not want to indicate a PUSCH exceeding 4 layers, the 4-port SRS resource may not be configured. The base station may perform the PUSCH scheduling using only the existing SRI field, so the DCI payload may be saved.

### Proposal 2

All SRS resources configured within the SRS resource set for the non-codebook (NCB) usage may be configured as 1-port SRS resources. Additionally, the following options may be utilized in the PUSCH scheduling to indicate a combination of a max of 8 SRS resources with a single SRI field.

### Option 1)

A total number of combinations that may be composed of a max of 8 SRS resources in the SRS resource set for the NCB usage is 8C1(8) + 8C2(28) + 8C3(56) + 8C4(70) + 8C5(56) + 8C6(28) + 8C7(8) + 8C8(1) = 255 (expressed in 8 bits). Here, 8C1 means a number of cases in which one SRS resource is selected among eight SRS resources. In terms of base station/terminal implementation, implementing all combinations of SRI(s) corresponding to 255 entries may have significant overhead/complexity. In order to prevent this, the following operations/configurations may be considered:

By configuring an SRI field of a max of 8 bits in the UL grant DCI, all/some of the 8 SRS resources starting from a lowest resource (i.e., an SRS resource with a lowest index) may be indicated in the form of a full bitmap. When resources of SRS resources #0 to #7 are configured in the SRS resource set for the NCB usage, if resources #0 and #2 are to be indicated, the base station may schedule 2-rank PUSCH transmission by indicating resources #0 and #2 like "10100000" in a max 8-bit SRI field of the UL grant DCI upon scheduling the PUSCH.

### Option 2)

A method may be considered to limit a number of combinations for SRS resources by rank by stipulating/defining/configuring only some combinations among all combinations which are enabled to be composed of a max of 8 SRS resources within the SRS resource set for the NCB usage.

According to one embodiment, the limitation of the combination may be performed as follows. By defining/configuring only some 8Cxs from 8C1 to 8C8 to be supported, a table for expressing/indicating an SRI field size and an SRI field entries may be simplified. For example, 8C3 and 8C5, 8C7, etc., may be defined/configured not to be supported. In this case, an SRI field of a max of 7 bits may also be utilized in order to support 135 entries.

According to one embodiment, the limitation of the combination may be performed as follows. By defining/configuring only some combinations to be supported in specific 8Cx, the table for expressing/indicating the SRI field size and the SRI field entry may be simplified. Some supported combinations above may be configured in a scheme that gives priority to a specific (lowest) SRS port in which a performance of a power amplifier (PA) is superior in terms of implementation of a radio frequency (RF). As one example, some supported combinations may be combinations including an SRS resource in which an RF related performance is superior/a good SRS port(s) or lowest SRS port is configured. As a result, the SRI field size may be saved. For example, a 2-rank SRI may be configured so that for an 8C2 combination, an SRS resource with local index 0 is unconditionally included (i.e., [0, 1], [0,2], [0,3], [0,4], [0,5], [0,6], and [0,7]).

### Option 3)

The base station may configure a max of 8 SRS resources within the SRS resource set configured for the NCB usage through an RRC signaling. In addition, the base station may perform a sub-selection operation through a MAC control element (CE) that activates some of the eight SRS resources adaptively to a UL channel environment for indicating the SRI field. In the MAC CE message, a field for selecting some SRS resource(s) among the 8 SRS resources, for example, in a single octet may be present/defined. The size of the SRI field may be adaptively varied through the MAC CE.

### Option 4)

The base station may configure a max of 8 SRS resources within the SRS resource set configured for the NCB usage through the RRC signaling. In addition, the base station may utilize an SRI field of max 8 bits for scheduling the PUSCH.

Here, when two SRI fields are utilized like Rel-17 S-DCI based M-TRP PUSCH transmission, the following operation may be performed.

When a value of "00" (i.e., '0' in Table 6) or "01" (i.e., '1' in Table 6) is indicated by the SRS resource set indicator field, and S-TRP PUSCH transmission scheduling is performed, the base station may utilize an entirety of the max of 8 bit SRI field for transmitting the PUSCH. In other words, the base station may utilize one SRI field of 8 bits.

On the other hand, when a value of "11" (i.e., '2' in Table 6) or "11" (i.e., '3' in Table 6) is indicated by the SRS resource set indicator field, and M-TRP PUSCH transmission scheduling is performed, the max of 8 bits may be divided into two SRI fields of 4 bits + 4 bits. The base station may perform indication of two SRIs for the M-TRP PUSCH transmission based on two 4-bit SRI fields.

In a scheme of dividing the 8 bits into two SRI fields of 4 bits each and utilizing them, the following embodiment may be considered. The SRI field saving method of the above-described embodiments may be utilized, or scheduling may be limited to a max 4 layer PUSCH per TRP. As a result, a method for scheduling the max 4 layer PUSCH with a max 4 bit SRI field per target TRP may be utilized. And/or, if the max 8 bits are divided into two SRI fields, such as 4 bits + 4 bits, the layers of each PUSCH per target TRP may be limited to max 4. In this case, 4-layer transmission may be supported with 4 bits in each SRI field.

### Proposal 3

Two SRI fields utilized in Rel-17 S-DCI based M-TRP PUSCH transmission may be utilized for max 8 Tx PUSCH scheduling. The base station may indicate a max of 4 SRIs in each SRI field through a combination of max 4 bits + max 4 bits, so max 8 layer (S-TRP) PUSCH may be scheduled.

Here, since the scheduling corresponds to S-TRP PUSCH scheduling, the following embodiments may be considered.

According to one embodiment, the SRI(s) mapped/linked to two SRI fields may be configured in a single SRS resource set rather than being configured separately in two SRS resource sets (for the NCB usage). Additionally, a configuration of a same power control parameter set may be applied for SRS transmission.

According to one embodiment, SRIs mapped/connected to two SRI fields may be divided and configured into two SRS resource sets (for the NCB usage). In other words, SRIs may be indicated from two SRS resource sets. At this time, one operation/configuration of i) to iii) below may be applied.
i) The UE may expect the PC parameter set to be configured only for one specific set of the two SRS resource sets (e.g., the first (and/or lowest indexed) SRS resource set).
ii) The UE may not expect different PC parameter sets to be configured in two SRS resource sets.
iii) Even if different PC parameter sets are configured for two SRS resource sets, the UE may follow only one PC parameter set among the two sets (e.g., the PC parameter set associated with the first (and/or lowest indexed) SRS resource set).

If max 8 SRS resources are configured within a single SRS resource set, max 8 SRS resources within the single SRS resource set may be defined/configured to be mapped to the SRI fields as follows. Starting with the SRS resource having the lowest index, n resource(s) (where n is a natural number) may be mapped to the first SRI field, and the remaining resource(s) may be mapped to the second SRI field.

Additionally, for the two SRI fields for the existing M-TRP PUSCH operation, two different PC parameter sets (e.g., two sri-PUSCH-MappingToAddModList) are mapped to each SRI field. However, in the embodiment, since a single power control for an S-TRP PUSCH must be performed, only a single PC parameter set (e.g., a single sri-PUSCH-MappingToAddModList) may be configured for only one specific SRI field (e.g., the first or lowest SRI field). And/or the UE may expect such an operation (i.e., the UE may not expect a configuration of two sri-PUSCH-MappingToAddModLists.

And/or even if two different PC parameter set(s) (e.g., two sri-PUSCH-MappingToAddModLists) are mapped/configured/connected to each SRI field, the UE may follow only the first (or lowest) parameter set(s) (e.g., the first/lowest sri-PUSCH-MappingToAddModList) among the different PC parameter set(s) (e.g., PUSCH power control indication may be performed only by a codepoint of the first/lowest SRI field).

Even if two SRI fields are configured as above, for the following configurations i) to iii), the UE may consider/judge that the base station intends to utilize the two SRI fields for 8 Tx UL transmission for an S-TRP usage, and the above-described operations may be performed.
i) Only one SRS resource set is configured for a CB/NCB usage.
ii) Even if two SRS resource sets are configured, the PC parameters are set for only one SRS resource set.
iii) The PC parameter set for the PUSCH usage connected to the SRI field is configured in only one SRI field.

If two SRI fields are utilized for 8 Tx UL transmission as described above, all or some of the fields present/defined for M-TRP PUSCH transmission scheduling (e.g., an SRS resource set indication field and second phase tracking reference signal (PT-RS) indication field, and first or second TPC field) may not be configured for the UL grant DCI. Alternatively, even if the fields are configured, the fields may be considered as unused fields, or the unused fields may be utilized to indicate a combination of max 8 SRI(s).

Methods i) and ii) below may be considered in order to support 8 Tx UL transmission by utilizing two SRI fields of the existing Rel-17
i) Method of utilizing a specific SRS resource set among two (CB or NCB) SRS resource sets configured for two SRI fields
ii) Method of utilizing both two (CB or NCB) SRS resource sets configured for two SRI fields

As shown in Table 6 above, two SRI fields may have a connection/correspondence relationship with two preset SRS resource sets. When the SRS resource set indication field is "0" or '1', S-TRP (PUSCH repetition) transmission may be performed utilizing a first SRS resource set or a second SRS resource set (out of two SRS resource sets).

In addition, when the SRS resource set indication field is '2' or '3', M-TRP PUSCH repetition is performed, and depending on whether it is '2' or '3', a mapping order between two SRS resource sets and transmission opportunity (TO) groups may be changed (for example, when the SRS resource set indication field is '2, the first SRS resource set may correspond to a first TO group, and the second SRS resource set may correspond to a second TO group, or when the SRS resource set indication field is '3', the second SRS resource set may correspond to the first TO group, and the first SRS resource set may correspond to the second TO group).

According to Method i) above, in the existing Rel-17, the maximum number of SRS ports that may be set in a specific SRS resource set among two SRS resource sets is 4, but the maximum number of SRS ports that may be set in a specific SRS resource set may be increased up to 8. In this case, the operations according to the value of the SRS resource set indication field are described in detail below.

When the SRS resource set indication field is '0' or '1', the base station may schedule an S-TRP 8 Tx UL PUSCH by utilizing an SRS resource(s) of max 8 ports configured in one SRS resource set among two SRS resource sets. In this case, up to 8 Tx PUSCHs may be scheduled (up to 8 bits) using codepoints of a reserved SRI field among two SRI fields. In other words, one 8-bit SRI field (e.g., the first SRI field) may be utilized for PUSCH scheduling.

When the SRS resource set indication field is '2' or '3', the existing Rel-17 M-TRP PUSCH repetition operation may be scheduled by using only 4 ports (among 8 ports SRS resource(s) configured) in each SRS resource set among two SRS resource sets for M-TRP PUSCH repetition transmission. In order to utilize only 4 ports among 8 port resource(s) configured within the specific SRS resource set for M-TRP transmission, the following operation/configuration may be performed.

In the case of the NCB, up to 4 (1-port) SRS resources with a lowest identity (ID) may be utilized. In other words, four (1-port) SRS resources may be mapped to each SRI field.

In the case of the CB, only lowest 4 ports of the SRS resource may be utilized for the PUSCH scheduling (when the 8-port SRS resource is configured). Alternatively, a lowest SRS resource may be utilized (when multiple 4-port SRS resources are configured to support 8 ports). In other words, an SRS resource with a lowest index in each SRS resource set may be mapped to each SRI field.

According to Method ii) above, two SRS resource sets, each including up to 4 ports, configured for the Rel-17 M-TRP PUSCH may be utilized as they are. In this case, the operations according to the value of the SRS resource set indication field are described in detail below.

When the SRS resource set indication field is '0' or '1', both two SRS resource sets may be utilized for the S-TRP PUSCH transmission. That is, the PUSCH scheduling may be performed by utilizing an SRS resource(s) corresponding to up to 8 ports included in two SRS resource sets. In this case, among the two SRI fields, even the reserved SRI field may be used for the PUSCH scheduling.

In addition, as described above, for the following a) or b), the UE may consider/understand that the max 8 port SRS resource(s) utilizing the two SRI fields are utilized for 8 Tx S-TRP PUSCH transmission and perform subsequent max 8-layer PUSCH transmission.
a) When each PUSCH PC parameter configured/connected to each codepoint indicated in the first SRI field and the second SRI field is the same PC parameter set,
b) When the PUSCH PC parameter set is configured/connected to only one specific codepoint among each codepoint indicated in each SRI field

Or/and, for a UE supporting Rel-18 8 Tx UL, when the SRS resource set indication field is "0" or '1' for two SRI fields related to the Rel-17 M-TRP PUSCH, the UE may consider and operate the two sets as being used for an S-TRP PUSCH scheduling usage (up to 8 Tx).

Hereinafter, in Embodiments 1) to 3) of Proposal 3, in DCI for supporting the existing Rel-17 M-TRP PUSCH, an indicator/flag configuration/indication for utilizing two SRI fields (with two CB/NCB SRS resource sets) for (S-TRP) 8 Tx UL transmission will be described in detail.

### Embodiment 1)

Based on the presence or absence of the SRS resource set indication field in the DCI (e.g., DCI format 0_1/0_2), it may be determined whether the two SRI fields of the DCI will be used for the M-TRP PUSCH scheduling or the (S-TRP) 8 Tx UL PUSCH scheduling.

When the SRS resource set indication field is not present or is not configured in the DCI, the two SRI fields in the DCI may be utilized for the (S-TRP) 8 Tx UL PUSCH scheduling. As one example, the UE may consider and operate the two SRI fields as being for the (S-TRP) 8 Tx UL PUSCH scheduling.

When the SRS resource set indication field is configured in the DCI, the field may be utilized for S-TRP/M-TRP switching as in the existing Rel-17 operation.

### Embodiment 2)

An (additional) DCI 1 bit indication field may be introduced to indicate whether the two SRI fields in the DCI (e.g., DCI format 0_1/0_2) are to be used for the M-TRP PUSCH scheduling or the (S-TRP) 8 Tx UL PUSCH scheduling.

For example, when the corresponding 1 bit field is '0 (or 1)', two SRI fields may be utilized as the existing Rel-17 M-TRP PUSCH scheduling operation. For example, when the corresponding 1 bit field is '1 (or 0)', two SRI fields may be utilized as an (S-TRP) 8 Tx UL PUSCH scheduling operation.

### Embodiment 3)

Based on the PUSCH repetition number (set/indicated by the DCI), it may be determined whether the two SRI fields will be used for the M-TRP PUSCH scheduling or (S-TRP) 8 Tx UL PUSCH scheduling.

For example, when the PUSCH repetition number is set/indicated to a value greater than 1, the two SRI fields of the DCI may be utilized for the existing Rel-17 M-TRP PUSCH scheduling operation. When the PUSCH repetition number is set/indicated to 1, two SRI fields may be utilized for the (S-TRP) 8 Tx UL PUSCH scheduling operation.

When two SRI fields are utilized for the (S-TRP) 8 Tx UL PUSCH scheduling by the operations of the embodiment, other fields (e.g., at least one of SRS resource set indication field, Second PTRS-DMRS association field, second TPMI field, and Second TPC command for scheduled PUSCH field) in the DCI for the existing M-TRP PUSCH may not be configured or may be ignored/overridden by the UE (as unused fields).

As another example, similar to Proposal 3, the up to 8-layer PUSCH scheduling may be performed by utilizing two SRI fields, but the base station may set the number of SRIs that may be mapped to the first SRI field to (at least) 4. As a result, the UE may consider/judge that the second SRI field is activated and decode the second SRI field only when the first SRI field indicates 4 rank (4C4) (e.g., an entry corresponding to index 14 in Table 5).

That is, since 4 layers are indicated from the first SRI field and X layers are indicated from the second SRI field, PUSCH scheduling of 4 + X layers is possible (i.e., combinations such as 3 layers + 3 layers and 3 layers + 2 layers may not be supported). Here, the UE may not perform decoding for the second SRI field when the second SRI field is not activated.

As one example, when the UE supports up to Y layers, a size of the second SRI field may be defined/set by the Y value. As one example, the size of the second SRI field may be defined/set by a number of SRS resources set in (one or two) SRS resource sets for the NCB usage.

As a specific example, even if the set number of SRS resources is 8, if Y is 5, the first SRI field may be 4 bits to support a combination of 4 SRIs, and the second SRI field may be composed of 2 bits. That is, the remaining one SRI may be indicated based on the two bits. Specifically, based on the 2 bits, one of four SRS resources (one of the combinations of 4C1 (= 4)) may be indicated.

The above-described operations may be utilized for dynamic grant (DG)/configured grant (CG)-PUSCH scheduling. As one example, in the case of Type 1 CG-PUSCH, since the PUSCH is activated through an RRC configuration, a combination of PC parameter set indications and/or SRI(s) for PUSCH transmission of 4 layers or more, such as the proposals, may be configured/indicated in the corresponding CG-PUSCH related RRC IE.

The above-described proposals/embodiments may be utilized in A UE/base station operation in one or more combinations. In other words, two or more embodiments/proposals MAY be combined and applied to the UE/base station operation, as long as mutually exclusive operations/configurations are not presupposed.

One example of the UE (or BS) operation based on at least one of the embodiments described above (e.g. at least one of Proposals 1 to 3) is as follows.
1) The UE (base station) receives (transmits) configuration information for PUSCH transmission.

The configuration information may include an SRS resource set configuration for the CB/NCB usage based on Proposals 1 to 3.

2) The UE (base station) receives (transmits) a scheduling message for a dynamic grant (DG)/configured grant (CG)-PUSCH.

The scheduling message may be received (transmitted) based on DCI or RRC signaling. As one example, when the scheduling is performed via the DCI, the scheduling may be performed based on Proposals 1 to 3.

3) The UE (base station) transmits (receives) a PUSCH based on the message (e.g. DCI or RRC signaling).

The SRI(s) combination and rank, and precoder for transmission of the PUSCH may be determined based on Proposals 1 to 3. As one example, the UE may determine the transmission antenna port, rank, and precoder for PUSCH transmission by the SRI(s) indication based on Proposals 1 to 3.

The UE/base station operations are only examples, and each operation (or step) is not necessarily required, and the operations related to the 8 Tx UL transmission of the UE according to the above-described embodiments may be omitted or added depending on a UE/base station implementation scheme.

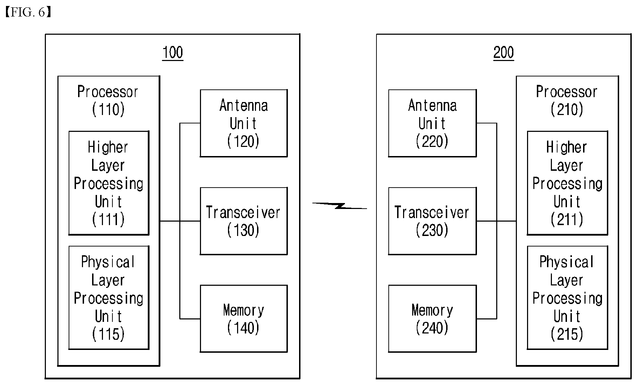

In terms of implementation, the operations of the base station/UE according to the above-described embodiments (e.g., operations based on at least one of Proposal 1, Proposal 1-1, Proposal 1-2, Proposal 2, and/or Proposal 3) may be processed by devices in FIG. 6 described below (e.g., processors 110 and 210 in FIG. 6).

Further, the operations of the base station/UE according to the above-described embodiments (e.g., operations based on at least one of Proposal 1, Proposal 1-1, Proposal 1-2, Proposal 2, and/or Proposal 3) may be stored in memories (e.g., 140 and 240 in FIG. 6) in the form of commands/programs (e.g., instructions and executable codes) for driving at least one processor (e.g., 110 and 210 in FIG. 6).

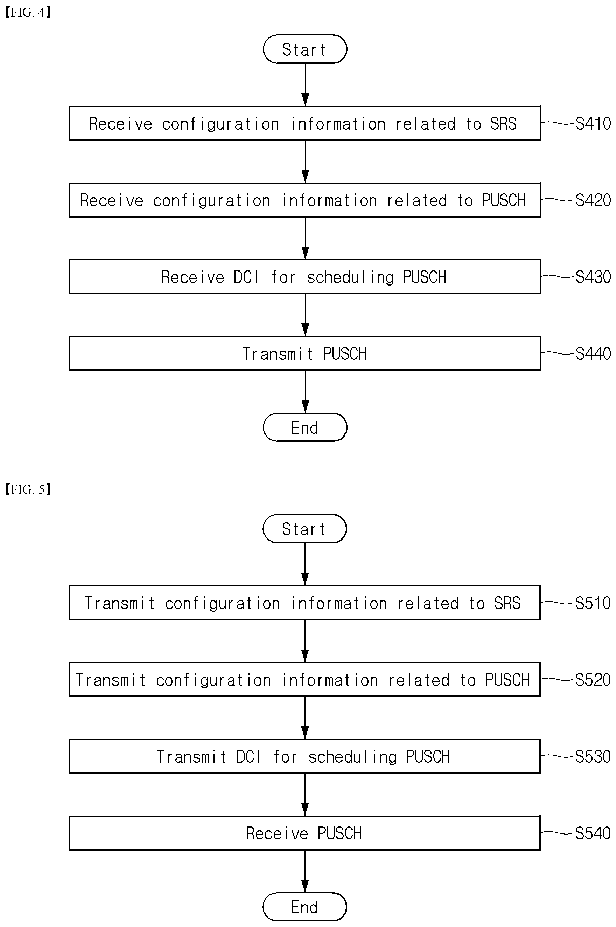

Hereinafter, the above-described embodiments will be described in detail with reference to FIGS. 4 and 5 in terms of the operations of the UE and the base station. Methods to be described below are just distinguished for convenience of description and it is needless to say that some components of any one method may be substituted with some components of another method or may be applied in combination with each other.

FIG. 4 is a flowchart for describing a method performed by a user equipment (UE) according to one embodiment of the present disclosure.

Referring to FIG. 4, the method performed by the UE in the wireless communication system according to one embodiment of the present disclosure includes a step (S410) of receiving configuration information related to an SRS, a step (S420) of receiving configuration information related to a PUSCH, a step (S430) of receiving DCI for scheduling the PUSCH, and a step (S440) of transmitting the PUSCH.

In S410, the UE receives configuration information related to a sounding reference signal (SRS) from the base station. As one example, the configuration information includes information for at least one SRS resource set. As one example, the configuration information may be based on SRS-Config in Table 1.

As one example, two SRS resource sets may be configured based on the configuration information related to the SRS. Usages of the two SRS resource sets may be configured as codebook or non-codebook.

The configuration information may include information related to a configuration based on at least one of Proposal 1, Proposal 1, Proposal 1-1, Proposal 1-2, Proposal 1-3, Proposal 2, and/or Proposal 3.

In S420, the UE receives, from the base station, configuration information related to a physical uplink shared channel (PUSCH).

The transmission scheme related to the PUSCH may be configured to a codebook based transmission or a non-codebook based transmission based the configuration information.

In S430, the UE receives, from the base station, downlink control information (DCI) for scheduling the PUSCH.

According to one embodiment, the DCI may include at least one of i) an SRS resource set indicator field, ii) a first SRS resource indicator (SRI) field, and/or iii) a second SRS resource indicator (SRI) field. As one example, the DCI may not include an SRS resource set indication field (or a bit number of the SRS resource set indication field is 0). As one example, the DCI may include only any one of the first SRI field and the second SRI field (or a bit number of any one SRI field (e.g., the second SRI field) is 0).

In S440, the UE transmits the PUSCH to the base station based on the DCI.

A number of layers related to the PUSCH may be larger than 4. That is, the number of layers related to the PUSCH may be up to 8.

According to one embodiment, the PUSCH may be transmitted based on antenna ports. The antenna ports are based on SRS ports related to one or more SRS resources indicated based on the DCI. The embodiment may be based on at least one of Proposal 1, Proposal 2 or Proposal 3. Hereinafter, the embodiment will be described in detail.

The antenna ports may be determined based on i) at least one of eight first SRS ports related to a first SRS resource set and/or ii) at least one of eight second SRS ports related to a second SRS resource set.

A case may be considered where one or both of the two SRS resource sets are used. Hereinafter, the embodiments based on Method i) of Proposal 3 will be described in detail.

According to one embodiment, based on the value of the SRS resource set indicator field being 0 or 1,
the one or more SRS resources may be indicated based on the first SRI field. The one or more SRS resources may be related to the first SRS resource set or the second SRS resource set. As a specific example, when the value of the SRS resource set indicator field is 0, an SRS resource(s) of the first SRS resource set may be indicated based on the first SRI field. As a specific example, when the value of the SRS resource set indicator field is 1, an SRS resource(s) of the second SRS resource set may be indicated based on the first SRI field.

At this time, bits of the second SRI field that are reserved may be utilized. As one example, the DCI may include only the first SRI field of at most 8 bits. As one example, the DCI may include the first SRI field and the second SRI field, and the number of bits of the second SRI field may be 0. According to one embodiment, a maximum number of bits of the first SRI field may be 8, and the number of bits of the second SRI field may be 0. That is, the first SRI field is not always 8 bits, and the number of bits of the first SRI field may be determined based on the number of SRS resources set in the SRS resource set (Nsrs) and the maximum number of layers (Lmax) (or the maximum number of SRIs indicated).

As one example, when the number of SRS resources (Nsrs) is 4, and the maximum number of layers (Lmax) is 1 (that is, when only at most one resource (SRI) among four SRS resources is indicated), the number of bits of the first SRI field may be 2 (see Table 2).

As one example, when the number of SRS resources (Nsrs) is 4, and the maximum number of layers (Lmax) is 2, 3, or 4 (that is, when only at most 2, 3, or 4 resources (SRIs) among four SRS resources are indicated), the number of bits of the first SRI field may be 4 (see Tables 3 to 5).

As one example, when the number of SRS resources (Nsrs) is 8, and the maximum number of layers (Lmax) is 8 (that is, when at most eight resources (SRIs) among eight SRS resources are indicated), the number of bits of the first SRI field may be 8.

As one example, the antenna ports may be determined based on i) five or more first SRS ports among the eight first SRS ports or ii) five or more second SRS ports among the eight second SRS ports.

As one example, the PUSCH may be related to a single transmission and reception point (TRP).

According to one embodiment, based on the value of the SRS resource set indicator field being 2 or 3,
the one or more SRS resources may include i) at least one SRS resource indicated based on the first SRI field and ii) at least one SRS resource indicated based on the second SRI field.

As one example, the antenna ports may be determined based on i) up to four first SRS ports among the eight first SRS ports or ii) up to four second SRS ports among the eight second SRS ports.

As one example, at least one SRS resource indicated based on each SRI field (e.g., the first SRI field or the second SRI field) may be related to the first SRS resource set or the second SRS resource set. As a specific example, when the value of the SRS resource set indicator field is 2, at least one SRS resource indicated based on the first SRI field (the second SRI field) may be related to the first SRS resource set (the second SRS resource set). As a specific example, when the value of the SRS resource set indicator field is 3, at least one SRS resource indicated based on the first SRI field (the second SRI field) may be related to the second SRS resource set (the first SRS resource set).

As one exmaple, the PUSCH may be related to multiple transmisison and reception points (TRPs).

A case may be considered where both of the two SRS resource sets are continuously used. Hereinafter, the embodiments based on Method ii) of Proposal 3 will be described in detail.

According to one embodiment, based on the value of the SRS resource set indicator field being 0 or 1,
The one or more SRS resources may include at least one SRS resource indicated based on each SRI field.

As one example, PUSCH power control parameter sets related to codepoints of respective SRI fields may be the same as each other.

As one example, the PUSCH power control parameter set may be associated with only one of a codepoint of the first SRI field and a codepoint of the second SRI field.

Embodiments which may be applied to determine whether the PUSCH is an S-TRP PUSCH or an M-TRP PUSCH will be described below in detail.

According to one embodiment, the DCI may include a 1-bit field. The 1-bit field may indicate whether the PUSCH is related to a single TRP or multiple TRPs.

According to one embodiment, based on whether the SRS resource set indicator being included in the DCI, it may be determined whether the PUSCH is related to the single TRP or multiple TRPs.

According to one embodiment, a repetition number related to the PUSCH may be determined based on the DCI. It may be determined whether the PUSCH is related to the single TRP or multiple TRPs based on the repetition number.

The operations based on S410 to S440 described above may be implemented by the device in FIG. 6. For example, the UE 200 may control one or more transceivers 230 and/or one or more memories 240 to perform the operations based on S410 to S440.

Since each of steps S410 to S440 described above is not necessarily essential, some steps may be omitted in the method. For example, assuming that an SRS/PUSCH configuration exists in the UE in advance, S410 and/or S420 in the method may be omitted.

Hereinafter, the embodiments described above will be described in detail in terms of the operation of the base station.

S510 to S540 described below correspond to S410 to S440 described in FIG. 4. By considering the correspondence relationship, redundant descriptions are omitted. That is, a specific description of the base station operation described below may be replaced with the description/embodiment of FIG. 4 corresponding to the corresponding operation. As one example, the description/embodiment of 410 to S440 in FIG. 4 may be additionally applied to the base station operations in S510 to S540 described below.

FIG. 5 is a flowchart for describing a method performed by a base station according to another embodiment of the present disclosure.

Referring to FIG. 5, the method performed by the base station in the wireless communication system according to another embodiment of the present disclosure includes a step (S510) of transmitting configuration information related to an SRS, a step (S520) of transmitting configuration information related to a PUSCH, a step (S530) of transmitting DCI for scheduling the PUSCH, and a step (S540) of receiving the PUSCH.

In S510, the base station transmits configuration information related to a sounding reference signal (SRS) to the UE.

In S520, the base station transmits, to the UE, configuration information related to a physical uplink shared channel (PUSCH).

In S530, the base station transmits, to the UE, downlink control information (DCI) for scheduling the PUSCH.

In S540, the base station receives the PUSCH from the UE based on the DCI.

The operations based on S510 to S540 described above may be implemented by the device of FIG. 6. For example, the base station 100 may control one or more transceivers 130 and/or one or more memories 140 to perform the operations based on S510 to S540.

Since each of steps S510 to S540 described above is not necessarily essential, some steps may be omitted in the method. For example, assuming that the base station performs an SRS/PUSCH configuration in advance, S510 and/or S520 in the method may be omitted.

A device to which an embodiment of the present disclosure is applicable (a device implementing the method/operation according to an embodiment of the present disclosure) is described below with reference to FIG. 6.

FIG. 6 illustrates configuration of a first device and a second device according to an embodiment of the present disclosure.

A first device 100 may include a processor 110, an antenna unit 120, a transceiver 130, and a memory 140.

The processor 110 may perform baseband-related signal processing and include a higher layer processing unit 111 and a physical layer processing unit 115. The higher layer processing unit 111 may process operations of the MAC layer, the RRC layer, or higher layers. The physical layer processing unit 115 may process the operation of the PHY layer. For example, if the first device 100 is a base station (BS) device in BS-UE communication, the physical layer processing unit 115 may perform uplink reception signal processing, downlink transmission signal processing, and the like. For example, if the first device 100 is a first UE device in inter-UE communication, the physical layer processing unit 115 may performs downlink reception signal processing, uplink transmission signal processing, sidelink transmission signal processing, and the like. The processor 110 may control the overall operation of the first device 100 in addition to performing the baseband-related signal processing.

The antenna unit 120 may include one or more physical antennas and support MIMO transmission/reception if the antenna unit 120 includes a plurality of antennas. The transceiver 130 may include a radio frequency (RF) transmitter and an RF receiver. The memory 140 may store information processed by the processor 110 and software, operating systems, and applications related to the operation of the first device 100. The memory 140 may also include components such as a buffer.

The processor 110 of the first device 100 may be configured to implement the operation of the BS in the BS-UE communication (or the operation of the first UE device in the inter-UE communication) in embodiments described in the present disclosure.

The second device 200 may include a processor 210, an antenna unit 220, a transceiver 230, and a memory 240.

The processor 210 may perform baseband-related signal processing and include a higher layer processing unit 211 and a physical layer processing unit 215. The higher layer processing unit 211 may process the operation of the MAC layer, the RRC layer, or higher layers. The physical layer processing unit 215 may process the operation of the PHY layer. For example, if the second device 200 is a UE device in BS-UE communication, the physical layer processing unit 215 may perform downlink reception signal processing, uplink transmission signal processing, and the like. For example, if the second device 200 is a second UE device in inter-UE communication, the physical layer processing unit 215 may perform downlink reception signal processing, uplink transmission signal processing, sidelink reception signal processing, and the like. The processor 210 may control the overall operation of the second device 200 in addition to performing the baseband-related signal processing.

The antenna unit 220 may include one or more physical antennas and support MIMO transmission/reception if the antenna unit 220 includes a plurality of antennas. The transceiver 230 may include an RF transmitter and an RF receiver. The memory 240 may store information processed by the processor 210 and software, operating systems, and applications related to the operation of the second device 200. The memory 240 may also include components such as a buffer.

The processor 210 of the second device 200 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 100 and the second device 200, and redundant descriptions are omitted.

The wireless communication technology implemented in the devices 100 and 200 according to the present disclosure may further include narrowband Internet of Things (NB-IoT) for low-power communication in addition to LTE, NR, and 6G. For example, the NB-IoT technology may be an example of a low power wide area network (LPWAN) technology and may be implemented in standards such as LTE Cat NB1 and/or LTE Cat NB2. The NB-IoT technology is not limited to the above-described names.

Additionally or alternatively, the wireless communication technology implemented in the devices 100 and 200 according to the present disclosure may perform communication based on LTE-M technology. For example, the LTE-M technology may be an example of the LPWAN technology, and may be called by various names such as enhanced machine type communication (eMTC). For example, the LTE-M technology may be implemented with at least one of various standards such as 1) LTE CAT 0, 2) LTE Cat M1, 3) LTE Cat M2, 4) LTE non-BL (non-Bandwidth Limited), 5) LTE-MTC, 6) LTE machine type communication, and/or 7) LTE M. The LTE-M technology is not limited to the above-mentioned names.

Additionally or alternatively, the wireless communication technology implemented in the devices 100 and 200 according to the present disclosure may include at least one of ZigBee, Bluetooth, and low power wide area network (LPWAN) in consideration of low power communication, and is not limited to the above-mentioned names. For example, the ZigBee technology may create personal area networks (PAN) related to small/low-power digital communication based on various standards such as IEEE 802.15.4, and may be called by various names.

## Claims

1. A method performed by a user equipment (UE) in a wireless communication system, the method comprising:
receiving configuration information related to a sounding reference signal (SRS),
wherein two SRS resource sets are configured based on the configuration information related to the SRS, and usages of the two SRS resource sets are configured as a codebook or a non-codebook;
receiving configuration information related to a physical uplink shared channel (PUSCH),
wherein a transmission scheme related to the PUSCH is configured as a codebook based transmission or a non-codebook based transmission based the configuration information;
receiving downlink control information (DCI) for scheduling the PUSCH,
wherein the DCI includes at least one of i) an SRS resource set indicator field, ii) a first SRS resource indicator (SRI) field, and/or iii) a second SRS resource indicator (SRI) field; and
transmitting the PUSCH based on the DCI,
wherein a number of layers related to the PUSCH is larger than 4,
wherein the PUSCH is transmitted based on antenna ports,
wherein the antenna ports are based on SRS ports related to one or more SRS resources indicated based on the DCI, and
wherein the antenna ports are determined based on i) at least one of eight first SRS ports related to a first SRS resource set and/or ii) at least one of eight second SRS ports related to a second SRS resource set.

2. The method of claim 1, wherein based on a value of the SRS resource set indicator field being 0 or 1: the one or more SRS resources are indicated based on the first SRI field, and the one or more SRS resources are related to the first SRS resource set or the second SRS resource set.

3. The method of claim 2, wherein a maximum number of bits of the first SRI field is 8, and a number of bits of the second SRI field is 0.

4. The method of claim 2, wherein the antenna ports are determined based on i) five or more first SRS ports among the eight first SRS ports or ii) five or more second SRS ports among the eight second SRS ports.

5. The method of claim 2, wherein the PUSCH is related to a single transmission and reception point (TRP).

6. The method of claim 1, wherein based on the value of the SRS resource set indicator field being 2 or 3: the one or more SRS resources include i) at least one SRS resource indicated based on the first SRI field and ii) at least one SRS resource indicated based on the second SRI field.

7. The method of claim 6, wherein the antenna ports are determined based on i) up to four first SRS ports among the eight first SRS ports and ii) up to four second SRS ports among the eight second SRS ports.

8. The method of claim 6, wherein at least one SRS resource indicated based on each SRI field is related to the first SRS resource set or the second SRS resource set.

9. The method of claim 6, wherein the PUSCH is related to multiple transmission and reception points (TRPs).

10. The method of claim 1, wherein based on a value of the SRS resource set indicator field being 0 or 1: the one or more SRS resources include at least one SRS resource indicated based on each SRI field.

11. The method of claim 10, wherein a PUSCH power control parameter set related to a codepoint of each SRI field is same.

12. The method of claim 10, wherein the PUSCH power control parameter set is associated with only one of a codepoint of the first SRI field and a codepoint of the second SRI field.

13. The method of claim 1, wherein the DCI includes a 1-bit field, and
wherein the 1-bit field indicates whether the PUSCH is related to a single TRP or multiple TRPs.

14. The method of claim 1, wherein based on whether the SRS resource set indicator being included in the DCI, whether the PUSCH is related to a single TRP or multiple TRPs is determined.

15. The method of claim 1, wherein a repetition number related to the PUSCH is determined based on the DCI, and wherein whether the PUSCH is related to a single TRP or multiple TRPs is determined based on the repetition number.

16. A user equipment (UE) operating in a wireless communication system, the UE comprising:
one or more transceivers,
one or more processors; and
one or more memories operably connectable to the one or more processors, and storing instructions of configuring the one or more processors to perform operations based on being executed by the one or more processors,
wherein the operations include
receiving configuration information related to a sounding reference signal (SRS),
wherein two SRS resource sets are configured based on the configuration information related to the SRS, and usages of the two SRS resource sets are configured as a codebook or a non-codebook,
receive configuration information related to a physical uplink shared channel (PUSCH),
wherein a transmission scheme related to the PUSCH is configured as a codebook based transmission or a non-codebook based transmission based the configuration information,
receiving downlink control information (DCI) for scheduling the PUSCH,
wherein the DCI includes at least one of i) an SRS resource set indicator field, ii) a first SRS resource indicator (SRI) field, and/or iii) a second SRS resource indicator (SRI) field, and
transmitting the PUSCH based on the DCI, and
wherein a number of layers related to the PUSCH is larger than 4,
wherein the PUSCH is transmitted based on antenna ports,
wherein the antenna ports are based on SRS ports related to one or more SRS resources indicated based on the DCI, and
wherein the antenna ports are determined based on i) at least one of eight first SRS ports related to a first SRS resource set and/or ii) at least one of eight second SRS ports related to a second SRS resource set.

17. A device comprising: one or more memories and one or more processors functionally connected to the one or more memories,
wherein the one or more memories include instructions of configuring the one or more processors to perform operations based on being executed by the one or more processors, and
wherein the operations include
receiving configuration information related to a sounding reference signal (SRS),
wherein two SRS resource sets are configured based on the configuration information related to the SRS, and usages of the two SRS resource sets are configured as a codebook or a non-codebook,
receive configuration information related to a physical uplink shared channel (PUSCH),
wherein a transmission scheme related to the PUSCH is configured as a codebook based transmission or a non-codebook based transmission based the configuration information,
receiving downlink control information (DCI) for scheduling the PUSCH,
wherein the DCI includes at least one of i) an SRS resource set indicator field, ii) a first SRS resource indicator (SRI) field, and/or iii) a second SRS resource indicator (SRI) field, and
transmitting the PUSCH based on the DCI, and
wherein a number of layers related to the PUSCH is larger than 4,
wherein the PUSCH is transmitted based on antenna ports,
wherein the antenna ports are based on SRS ports related to one or more SRS resources indicated based on the DCI, and
wherein the antenna ports are determined based on i) at least one of eight first SRS ports related to a first SRS resource set and/or ii) at least one of eight second SRS ports related to a second SRS resource set.

18. One or more non-transitory computer-readable media storing one or more instructions,
wherein one or more instructions executable by one or more processors configure the one or more processors to perform operations, and
wherein the operations include
receiving configuration information related to a sounding reference signal (SRS),
wherein two SRS resource sets are configured based on the configuration information related to the SRS, and usages of the two SRS resource sets are configured as a codebook or a non-codebook,
receive configuration information related to a physical uplink shared channel (PUSCH),
wherein a transmission scheme related to the PUSCH is configured as a codebook based transmission or a non-codebook based transmission based the configuration information,
receiving downlink control information (DCI) for scheduling the PUSCH,
wherein the DCI includes at least one of i) an SRS resource set indicator field, ii) a first SRS resource indicator (SRI) field, and/or iii) a second SRS resource indicator (SRI) field, and
transmitting the PUSCH based on the DCI, and
wherein a number of layers related to the PUSCH is larger than 4,
wherein the PUSCH is transmitted based on antenna ports,
wherein the antenna ports are based on SRS ports related to one or more SRS resources indicated based on the DCI, and
wherein the antenna ports are determined based on i) at least one of eight first SRS ports related to a first SRS resource set and/or ii) at least one of eight second SRS ports related to a second SRS resource set.

19. A method performed by a base station in a wireless communication system, the method comprising:
transmitting configuration information related to a sounding reference signal (SRS),
wherein two SRS resource sets are configured based on the configuration information related to the SRS, and usages of the two SRS resource sets are configured as a codebook or a non-codebook;
transmitting configuration information related to a physical uplink shared channel (PUSCH),
wherein a transmission scheme related to the PUSCH is configured as a codebook based transmission or a non-codebook based transmission based the configuration information,
transmitting downlink control information (DCI) for scheduling the PUSCH,
wherein the DCI includes at least one of i) an SRS resource set indicator field, ii) a first SRS resource indicator (SRI) field, and/or iii) a second SRS resource indicator (SRI) field; and
receiving the PUSCH based on the DCI,
wherein a number of layers related to the PUSCH is larger than 4,
wherein the PUSCH is received based on antenna ports,
wherein the antenna ports are based on SRS ports related to one or more SRS resources indicated based on the DCI, and
wherein the antenna ports are determined based on i) at least one of eight first SRS ports related to a first SRS resource set and/or ii) at least one of eight second SRS ports related to a second SRS resource set.

20. A base station operating in a wireless communication system, the base station comprising:
one or more transceivers,
one or more processors; and
one or more memories operably connectable to the one or more processors, and storing instructions of configuring the one or more processors to perform operations based on being executed by the one or more processors,
wherein the operations include
transmitting configuration information related to a sounding reference signal (SRS),
wherein two SRS resource sets are configured based on the configuration information related to the SRS, and usages of the two SRS resource sets are configured as a codebook or a non-codebook,
transmitting configuration information related to a physical uplink shared channel (PUSCH),
wherein a transmission scheme related to the PUSCH is configured as a codebook based transmission or a non-codebook based transmission based the configuration information,
transmitting downlink control information (DCI) for scheduling the PUSCH,
wherein the DCI includes at least one of i) an SRS resource set indicator field, ii) a first SRS resource indicator (SRI) field, and/or iii) a second SRS resource indicator (SRI) field, and
receiving the PUSCH based on the DCI, and
wherein a number of layers related to the PUSCH is larger than 4,
wherein the PUSCH is received based on antenna ports,
wherein the antenna ports are based on SRS ports related to one or more SRS resources indicated based on the DCI, and
wherein the antenna ports are determined based on i) at least one of eight first SRS ports related to a first SRS resource set and/or ii) at least one of eight second SRS ports related to a second SRS resource set.
